# EUROPÄISCHE PATENTSCHRIFT

(11) **EP 3 584 197 B1**
(45) Veröffentlichungstag und Bekanntmachung des Hinweises auf die Patenterteilung: **03.08.2022**
(21) Anmeldenummer: 19184795.3
(22) Anmeldetag: 19.02.2016
(51) Int. Cl.: B65G 1/04

(54) **LAGERSYSTEM**
STORAGE SYSTEM
SYSTÈME DE STOCKAGE

(30) Priorität: 06.03.2015 AT 501792015
(43) Veröffentlichungstag der Anmeldung: 25.12.2019
(62) Teilanmeldung aus: 16718988.5
(73) Patentinhaber: TGW Logistics Group GmbH, 4614 Marchtrenk (AT)
(72) Erfinder: PREIDT, Peter, 4615 Holzhausen (AT); SCHRÖPF, Harald Johannes, 4600 Wels (AT)
(74) Vertreter: Burger, Hannes

(56) Entgegenhaltungen:
- EP-A1- 2 234 904
- EP-A1- 2 687 463
- EP-B1- 2 234 904
- WO-A1-2009/143548
- US-A1- 2015 037 129
- US-A1- 2015 044 002
- US-B2- 8 162 585

## Beschreibung

Die Erfindung betrifft ein Lagersystem nach Anspruch 1.

Die EP 2 234 904 A1 offenbart ein Verfahren zum Einlagern von Ladehilfsmitteln mit einer Transportvorrichtung in einen Lagerkanal mit hintereinander angeordneten Abstellplätzen für Stückgüter einheitlicher Längen- und Breitenabmessungen. Dabei wird ein erstes Stückgut von der Transportvorrichtung in den Lagerkanal auf den in Einlagerrichtung vorderen Lagerplatz gefördert. Danach wird ein zweites Stückgut von der Transportvorrichtung in den Lagerkanal auf den vorderen Lagerplatz bewegt und dabei das erste Stückgut in Einlagerrichtung auf den dahinter liegenden Lagerplatz bewegt und das zweite Stückgut auf den vorderen Lagerplatz gefördert, sodass die Stückgüter dicht aneinander liegend im Lagerkanal abgestellt sind. Die Transportvorrichtung weist Mitnahmeorgane für den Einlagervorgang und Transportorgane für den Auslagervorgang auf.

Aus der EP 2 393 735 A1 ist eine Transportvorrichtung zum Einlagern von Ladehilfsmitteln bekannt, mittels welcher Stückgüter unterschiedlicher Längen- und Breitenabmessungen manipulierbar sind. Die Lagerkanäle weisen Stegrippenböden auf, an deren vorragenden Stegen die Stückgüter in unterschiedlichen Tiefenpositionen abstellbar sind.

Die US 8,594,835 B2 offenbart ein automatisches Lagersystem mit Lagerregalen mit in einem Raster angeordneten Lagerkanälen, einer Vielzahl von je Regalebene entlang von Führungsschienen in einer ersten Richtung (x-Richtung) bewegbaren Stückgutaufnahmevorrichtungen (Shuttle). Die Stückgutaufnahmevorrichtungen sind jeweils mit einer, in einer zweiten Richtung (z-Richtung) in den Lagerkanal ausfahrbaren Transportvorrichtung versehen. Die Stückgutaufnahmevorrichtungen und Transportvorrichtungen werden von einer Steuereinheit angesteuert. Die Lagerkanäle können Stückgüter unterschiedlicher Abmessungen aufnehmen.

Aus der JP 2005219832 A, JP 2000118639 A und JP 2008143660 A ist ein Lagersystem mit einem Lagerregal mit einer Vielzahl von Lagerkanälen bekannt, bei dem die Lagerkanäle zwar unterschiedlich breite Stückgüter aufnehmen können, jedoch befindet sich in einem Lagerkanal in der zweiten Richtung (z-Richtung) nur ein einziges Stückgut (W). Das vorhandene Stückgutsortiment wird in Breitenklassen eingeteilt, wobei dann die Stückgüter einer ersten Breitenklasse auf einer ersten Regalebene nebeneinander und einfachtief gelagert werden, die Stückgüter einer zweiten Breitenklasse auf einer zweiten Regalebene nebeneinander und einfachtief gelagert werden usw.

Die EP 2 543 446 A1 offenbart einen automatischen Scheibensortierer, welcher ein Lagerregal mit einer Vielzahl von Lagerkanälen und eine entlang des Lagerregales bewegbare Stückgutaufnahmevorrichtung umfasst. Die Stückgutaufnahmevorrichtung ist mit einer Transportvorrichtung ausgestattet, um Glasscheiben in einen Lagerkanal einzulagern oder aus einem Lagerkanal auszulagern. Die Transportvorrichtung kann nur eine Glasscheibe aufnehmen. Ist ein Lagerkanal bereits mit einer Glasscheibe belegt, wird aus der Differenz zur gesamten Regaltiefe die noch freie Regaltiefe berechnet und von der Steuerung eine Glasscheibe mit gleicher oder geringerer Länge dem bereits teilweise belegten Regalfach zugewiesen.

Aus der DE 10 2004 046 176 A ist ein automatisches Lagersystem bekannt, welches ein Lagerregal mit einer Vielzahl von Lagerkanälen, eine Ladevorrichtung zum Beladen von Tablaren, und entlang des Lagerregales in einer ersten Richtung (x-Richtung) bewegbare Stückgutaufnahmevorrichtungen umfasst. Die Stückgutaufnahmevorrichtungen sind jeweils mit einer in einer zweiten Richtung (z-Richtung) in den Lagerkanal ausfahrbaren Transportvorrichtung ausgestattet. Die Stückgüter werden über ein Förderband zur Ladevorrichtung gefördert und dort über einen Umsetzbackengreifer vom Förderband auf das Tablar umgeladen. Die Stückgüter werden in mehreren Reihen (R1, R2) nebeneinander auf das Tablar abgelegt, wobei innerhalb einer Reihe nur Stückgüter abgelegt werden, wenn ein Umschließungsrechteck dieser Reihe sich nicht mit einem Umschließungsrechteck der nächsten Reihe überlappt. Die Stückgüter können anschließend mittels der Transportvorrichtung einzeln oder als Reihe vom Tablar übernommen und auf die Lagerkanäle verteilt werden.

Die EP 1 627 830 A1 offenbart ein gattungsgemäßes Verfahren zum Einlagern von Stückgütern unterschiedlicher Abmessungen in Lagerkanäle eines Lagerregales mit einer Vielzahl von Lagerkanälen.

Die EP 2 687 463 A1 offenbart ein Lagersystem nach dem Oberbegriff des Anspruchs 1, mit einem Lagerregal mit einer Vielzahl von Lagerkanälen, zumindest einer entlang des Lagerregales in einer ersten Richtung (x-Richtung) bewegbaren Stückgutaufnahmevorrichtung und einer relativ gegenüber der Stückgutaufnahmevorrichtung in einer zweiten Richtung (z-Richtung) in den Lagerkanal ausfahrbaren Transportvorrichtung, durch welche Stückgüter in einen Lagerkanal eingelagert und Stückgüter aus dem Lagerkanal ausgelagert werden. Die Stückgüter können unterschiedliche Breitenabmessungen aufweisen.

Die US 2015/044002 A1 offenbart eine Stückgutaufnahmevorrichtung mit einem vertikal bewegbaren Tragrahmen, auf dem eine relativ gegenüber dem Tragrahmen ausfahrbare Transportvorrichtung, eine motorisierte Fördervorrichtung und ein Unterstützungsmittel gelagert sind. Die Transportvorrichtung umfasst synchron angetriebene Teleskoparme, welche zusätzlich aufeinander zubewegt und voneinander wegbewegt werden können, um ein Stückgut an den Seitflächen zu klemmen. Das Unterstützungsmittel umfasst einen relativ gegenüber dem Tragrahmen verstellbaren Teleskopdorn, welcher zwischen den synchron angetriebenen Teleskoparmen und unterhalb einer Förderebene der motorisierten Fördervorrichtung angeordnet ist, der das Stückgut auf der Verlagerungsbewegung mit einer Antriebskraft beaufschlagt.

Der vorliegenden Erfindung liegt die Aufgabe zugrunde, ein Lagersystem mit einer Stückgutaufnahmevorrichtung zu schaffen, welche eine zuverlässige Verlagerungsbewegung von Stückgütern zwischen der Stückgutaufnahmevorrichtung und einem Lagerkanal ermöglicht.

Die Aufgabe der Erfindung wird dadurch gelöst, dass die Stückgutaufnahmevorrichtung eine motorisierte Fördervorrichtung, die Transportvorrichtung und Unterstützungsmittel aufweist, wobei die motorisierte Fördervorrichtung, die Transportvorrichtung und die Unterstützungsmittel auf einem Tragrahmen gelagert sind, und wobei die Unterstützungsmittel in den gegenüber liegenden Endbereichen der motorisierten Fördervorrichtung angeordnet und jeweils durch eine motorisierte Fördervorrichtung gebildet sind, sodass auf der Verlagerungsbewegung der Stückgüter zwischen der Stückgutaufnahmevorrichtung und dem Lagerkanal das Stückgut auf dem Unterstützungsmittel aufliegen und mit einer Antriebskraft beaufschlagt werden kann, und wobei die motorisierten Fördervorrichtungen der Unterstützungsmittel jeweils durch eine angetriebene Stützrolle gebildet sind.

Durch die Anordnung von Unterstützungsmitteln in den gegenüber liegenden Endbereichen der motorisierten Fördervorrichtung ist es möglich, dass Stückgüter manipuliert werden können, welche eine besonders kurze Längenabmessung aufweisen, beispielweise im Bereich von 150 mm. Es erweist sich dabei von Vorteil, wenn die Unterstützungsmittel jeweils eine motorisierte Fördervorrichtung umfassen, sodass auf der Verlagerungsbewegung der Stückgüter zwischen der Stückgutaufnahmevorrichtung und dem Lagerkanal das Stückgut von unten mit einer Antriebskraft beaufschlagt werden kann, was sich insbesondere bei schweren Stückgütern von Vorteil erweist.

Von Vorteil ist auch die Ausgestaltung nach Anspruch 2, da die Stückgutvorrichtung bei hoher Funktionalität besonders einfach aufgebaut ist. Die Transportvorrichtung umfasst ausschließlich in den Endbereichen des zweiten Schlittens angeordnete Transportorgane, welchen zwischen der Ausgangsstellung und Betätigungsstellung verstellbar sind. Dabei können die Transportorgane gemeinsam mit den Teleskopeinheiten in x-Richtung oder die Transportorgane relativ gegenüber dem zweiten Schlitten bewegt werden. Die Fördervorrichtung ist bevorzugt stationär und ermöglicht die Positionierung der Stückgüter in z-Richtung.

Die Ausgestaltung nach Anspruch 3 ist von Vorteil, weil dadurch ein breites Stückgutsortiment manipuliert werden kann, daher Stückgüter mit kleinen Breitenabmessungen / Längenabmessungen und Stückgüter mit großen Breitenabmessungen / Längenabmessungen.

Die Stückgutaufnahmevorrichtung kann auch in den Endbereichen der Fördervorrichtung ein Anschlagelement umfassen, wie im Anspruch 4 beschrieben. Durch diese Maßnahme ist es nun möglich, Stückgüter auf der Stückgutaufnahmevorrichtung zu positionieren, welche eine besonders kurze Breitenabmessung aufweisen, beispielweise im Bereich von 200 mm.

Gemäß Anspruch 5 wird die Übernahme der Stückgüter auf der Stückgutaufnahmevorrichtung überwacht und damit eine Fehleinlagerung vermieden. Ergibt die Messung eine Abweichung der Istlänge für die Stückgutgruppe, welche auf der Stückgutaufnahmevorrichtung übernommen wurde, von der Solllänge für die Stückgutgruppe, welche auf der Stückgutaufnahmevorrichtung übernommen worden sein soll, wird ein Überwachungssignal ausgelöst. In diesem Fall ist möglicherweise ein manueller Eingriff in den Automatikbetrieb erforderlich.

Auch erweist sich von Vorteil, wenn im Lagersystem durch die Steuereinheit Breitenklassen festgelegt und die Stückgüter zu den jeweiligen Breitenklassen zugeordnet sowie Stückgutgruppen transportiert werden, da die Anzahl der Positioniervorgänge der Stückgutaufnahmevorrichtung einerseits gegenüber dem Bereitstellplatz und andererseits gegenüber dem Lagerkanal, in welchen die Stückgüter einer Breitenklasse eingelagert werden sollen, wesentlich reduziert werden kann. Dies wird umso deutlicher je höher die Anzahl an unterschiedlichen Breitenabmessungen für die Stückgüter vorliegen. Variieren die Stückgüter in der Breitenabmessung innerhalb einer vordefinierten Bandbreite, so werden diese Stückgüter nicht jeweils separat von der Stückgutaufnahmevorrichtung übernommen und eingelagert, sondern es werden diese einer Breitenklasse zugeordnet und dementsprechend selektiv zum Bereitstellplatz gefördert. Danach werden die Stückgüter dieser Breitenklasse auf der Stückgutaufnahmevorrichtung übernommen. Die Stückgüter sind dabei auf der Stückgutaufnahmevorrichtung zu einer Stückgutgruppe zusammengefasst. Danach wird diese Stückgutgruppe in einen Lagerkanal eingelagert. Nur wenn die Anzahl an Stückgütern in dieser Breitenabmessung höher ist, als der Lagerkanal in Tiefenrichtung aufnehmen kann, kann die Stückgutaufnahmevorrichtung einen ersten Einlagervorgang in einem ersten Lagerkanal und darauf folgend einen zweiten Einlagervorgang zu einem zweiten Lagerkanal ausführen. Somit kann gegenüber solchen aus dem Stand der Technik bekannten Lagersystemen, bei vergleichsweise gleichem Stückgutsortiment und wenn in einem Lagerkanal stets Stückgüter derselben Breitenabmessung eingelagert werden dürfen, eine wesentlich höhere Einlagerleistung erreicht werden. Zudem wird durch die Reduzierung der Anzahl an Positioniervorgängen der Stückgutaufnahmevorrichtung auch die Mechanik weniger beansprucht und die Verfügbarkeit des Lagersystemes erhöht. Sofern das Stückgutsortiment Stückgüter mit der derselben Breitenabmessung und in hoher Menge enthält, werden diese einer Breitenklasse zugeordnet und diese jeweils als Stückgutgruppe dicht aneinander gereiht auf der Stückgutaufnahmevorrichtung und danach in eine Vielzahl von Lagerkanälen jeweils als Stückgutgruppe nacheinander eingelagert. Die bezeichnete Stückgutgruppe bildet bevorzugt eine einzige Stückgutreihe, die in z-Richtung ausgerichtet ist.

Das Lagerregal ist dazu eingerichtet, Stückgüter unterschiedlicher Abmessungen aufzunehmen. Beispielweise sind die Lagerkanäle auf Lagerböden ausgebildet, die als Fachbodenplatte, Gitterfachböden und dgl. gestaltet sind. Es ist kein fixer Raster vorgegeben, in welchem die Stückgüter im Lagerregal abzulegen sind. Vielmehr kann von der Steuereinheit ein x-Rastabstand zwischen den Stückgutgruppen abhängig von der Breitenklasse für die Stückgüter vordefiniert werden. Es wird ersichtlich, dass nunmehr sowohl in x-Richtung als auch in z-Richtung eine optimale Ausnutzung der vorhandenen Lagerflächen möglich ist. Es wird also ein hoher Lagerfüllgrad erreicht.

Eine Vereinfachung der Lagerorganisation und Reduzierung des Steuerungsaufwandes wird erreicht, wenn das Lagerregal auf einer Regalebene eine erste Lagerzone mit einer Vielzahl von ersten Lagerkanälen und eine zweite Lagerzone mit einer Vielzahl von zweiten Lagerkanälen definiert, wobei in der ersten Lagerzone Stückgutgruppen umfassend die Stückgüter der ersten Breitenklasse und in der zweiten Lagerzone Stückgutgruppen umfassend die Stückgüter der zweiten Breitenklasse lagern.

Betrachtet man die erste Lagerzone, so können nun innerhalb eines ausgewählten (ersten) Lagerkanales Stückgüter mit jeweils denselben Breitenabmessungen (beispielweise 300 mm) gelagert werden. Auch können diese Stückgüter jeweils dieselben Längenabmessungen (beispielweise 400 mm) aufweisen. Bevorzugt werden in den anderen (ersten) Lagerkanälen der ersten Lagerzone Stückgüter gelagert, welche zumindest dieselben Breitenabmessungen (beispielweise 300 mm) wie die Stückgüter im ausgewählten (ersten) Lagerkanal aufweisen. Auch können diese Stückgüter wiederum dieselben Längenabmessungen (beispielweise 400 mm) wie die Stückgüter im ausgewählten (ersten) Lagerkanal aufweisen. Ein solches Einlagerverfahren hat den Vorteil, dass innerhalb eines Lagerkanales auch dieselben Artikel gelagert werden können. Ist der Artikel beispielweise ein Hemd, so lagern in einem Lagerkanal nur Hemden, welche zusätzlich noch allesamt denselben Artikeltyp betreffen können. Beispielweise sind im ausgewählten (ersten) Lagerkanal die Hemden der Größe X-Large und Farbe weiß eingelagert. In den anderen (ersten) Lagerkanälen ist ebenso derselbe Artikel beispielweise ein Hemd gelagert, entweder desselben Artikeltyps oder unterschiedlichen Artikeltyps. Beispielweise kann in einem anderen (ersten) Lagerkanal das Hemd der Größe Large und Farbe weiß eingelagert werden usw.

Betrachtet man die zweite Lagerzone, so können nun innerhalb eines ausgewählten (zweiten) Lagerkanales Stückgüter mit jeweils denselben Breitenabmessungen (beispielweise 500 mm) gelagert werden. Auch können diese Stückgüter jeweils dieselben Längenabmessungen (beispielweise 700 mm) aufweisen. Bevorzugt werden in den anderen (zweiten) Lagerkanälen der zweiten Lagerzone Stückgüter gelagert, welche zumindest dieselben Breitenabmessungen (beispielweise 500 mm) wie die Stückgüter im ausgewählten (zweiten) Lagerkanal aufweisen. Auch können diese Stückgüter wiederum dieselben Längenabmessungen (beispielweise 700 mm) wie die Stückgüter im ausgewählten (zweiten) Lagerkanal aufweisen. Ein solches Einlagerverfahren hat den Vorteil, dass innerhalb eines Lagerkanales auch dieselben Artikel gelagert werden können. Ist der Artikel beispielweise ein Pullover, so lagern in einem Lagerkanal nur Pullover, welche zusätzlich noch allesamt denselben Artikeltyp betreffen können. Beispielweise sind im ausgewählten (zweiten) Lagerkanal die Pullover der Größe X-Large und Farbe weiß eingelagert. In den anderen (zweiten) Lagerkanälen ist ebenso derselbe Artikel beispielweise ein Pullover gelagert, entweder desselben Artikeltyps oder unterschiedlichen Artikeltyps. Beispielweise kann in einem anderen (zweiten) Lagerkanal der Pullover der Größe Large und Farbe weiß eingelagert werden usw.

Wie daraus ersichtlich wird, unterscheiden sicher aber die Stückgüter der ersten Lagerzone von den Stückgütern der zweiten Lagerzone zumindest durch die Breitenabmessungen. Gegebenenfalls kann sich auch die Längenabmessung der Stückgüter der ersten Lagerzone von der Längenabmessung der Stückgüter der zweiten Lagerzone unterscheiden.

Bevorzugt werden die Stückgüter innerhalb der Stückgutgruppe gegeneinander ausgerichtet, bevor sie in den Lagerkanal gefördert werden. Bevorzugt verwendet man hierzu die Transportvorrichtung, insbesondere in x-Richtung relativ zueinander verstellbare Teleskopeinheiten. Möglich wäre aber auch eine zusätzliche Ausrichtvorrichtung, welche die Stückgutaufnahmevorrichtung umfasst. Damit wird sichergestellt, dass die Stückgutgruppe ausreichend genau im Lagerkanal gelagert wird, um einen nachfolgenden Auslagervorgang zuverlässig durchführen zu können.

Es kann auch eine Positionierung der Stückgutgruppe in z-Richtung vorgesehen werden, womit sichergestellt ist, dass das in Verlagerungsrichtung (Einlagerrichtung) hinterste Stückgut der Stückgutgruppe mit seiner Seitenwand ausreichend genau mit einer Stirnkante des Lagerkanales verläuft. Die Positionierung der Stückgutgruppe erfolgt über die Fördervorrichtung (Gurtförderer), in dem die Stückgutgruppe gegen das / die in Einlagerrichtung entfernte Transportorgan(e) oder das in Einlagerrichtung entfernte Anschlagelement bewegt werden.

Es erweist sich aber auch von Vorteil, wenn zum Auslagern von Stückgütern aus einem der Lagerkanäle die Schritte durchgeführt werden:
- Positionierung der Stückgutaufnahmevorrichtung vor dem Lagerkanal, aus welchem ein oder mehrere Stückgüter ausgelagert werden sollen,
- Verlagerung einzelner Stückgüter oder der Stückgutgruppe vom Lagerkanal auf die Stückgutaufnahmevorrichtung mittels der Transportvorrichtung derart, dass die Transportvorrichtung alle im Lagerkanal befindlichen Stückgüter gleichzeitig in eine zweite Verlagerungsrichtung (Auslagerrichtung) und soweit aus dem Lagerkanal heraus bewegt, bis die gewünschte Anzahl an Stückgütern oder die Stückgutgruppe auf der Stückgutaufnahmevorrichtung positioniert ist.

Es werden einzelne Stückgüter oder bevorzugt eine Stückgutgruppe aus einem Lagerkanal ausgelagert. Werden zu einem Kundenauftrag eine Vielzahl von gleichartigen Artikeln benötigt, beispielweise dieselben Hemden mit unterschiedlicher Größe und/oder Farbe, kann ein Auslagerauftrag eine Vielzahl von gleichartigen Stückgütern umfassen. In diesem Fall, kann die Stückgutaufnahmevorrichtung nacheinander die Lagerkanäle, welche jeweils die gleichartigen Stückgüter enthalten, anfahren und jeweils eine Stückgutgruppe mittels der Transportvorrichtung auslagern und darauffolgend zur Fördertechnik fördern. Damit wird eine hohe Auslagerleistung erreicht. Es erweist sich dabei auch besonders vorteilhaft, wenn der Ausfahrweg der Transportvorrichtung von der Steuereinheit abhängig von den (gemessenen) Istwerten der Längenabmessung der Stückgüter gesteuert wird.

Somit kann ein Lagersystem geschaffen werden, welches sich durch einen enorm hohen Lagerdurchsatz (Anzahl der Einlagervorgänge und Auslagervorgänge pro Zeiteinheit) bzw. eine maximale Lagerleistung auszeichnet.

Zum besseren Verständnis der Erfindung wird diese anhand der nachfolgenden Figuren näher erläutert.

Es zeigen jeweils in stark vereinfachter, schematischer Darstellung:
- Fig. 1: einen Ausschnitt eines Lagersystemes mit Lagerregalen und einer Stückgutaufnahmevorrichtung in Draufsicht auf eine unterste Regalebene;
- Fig. 2: das Lagersystem nach Fig. 1 in einer Ansicht gemäß der Linie II;
- Fig. 3: eine Transportvorrichtung zum Einlagern von Stückgütern in einen Lagerkanal bzw. Auslagern von Stückgütern aus einem Lagerkanal in Draufsicht auf einen Ausschnitt einer Regalebene;
- Fig. 4: ein Blockdiagramm für eine erste Ausführung eines Lagersystemes;
- Fig. 5: ein Blockdiagramm für eine zweite Ausführung eines Lagersystemes;
- Fig. 6: ein Blockdiagramm für eine dritte Ausführung eines Lagersystemes;
- Fig. 7a, 7b: ein Flussdiagramm für ein Einlagerverfahren;
- Fig. 8a bis 8e: eine Sequenzdarstellung zu einem Einlagervorgang von Stückgütern einer Breitenklasse;
- Fig. 9a bis 9f: eine Sequenzdarstellung zu einem Einlagervorgang von Stückgütern in einen Lagerkanal, in welchen bereits zwei Stückgüter im Lagerkanal einer Breitenklasse abgelegt sind;
- Fig. 10a, 10b: eine Sequenzdarstellung zu einem Auslagervorgang von Stückgütern einer Breitenklasse.

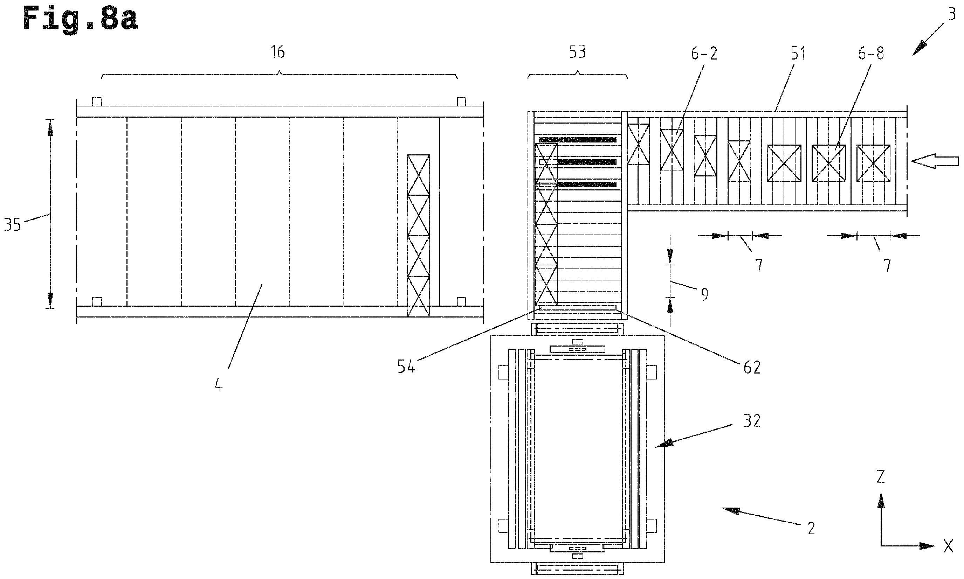

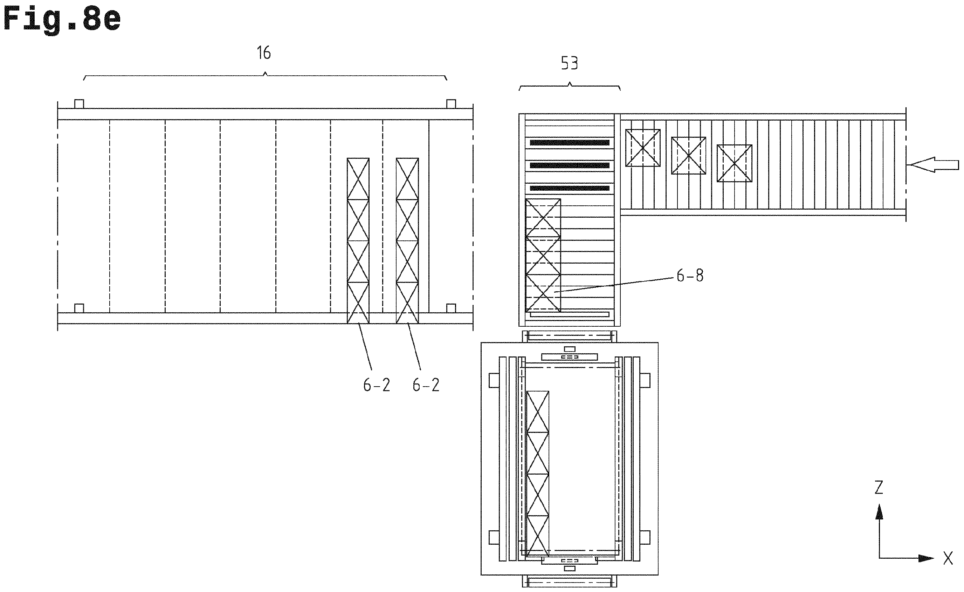

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen. Außerdem wurde aus Gründen der besseren Übersicht in den Fig. 8a - 8e, 9a - 9f und 10a - 10b nur eines der Lagerregale dargestellt und die Einlagerung / Auslagerung bezüglich diesem Lagerregal.

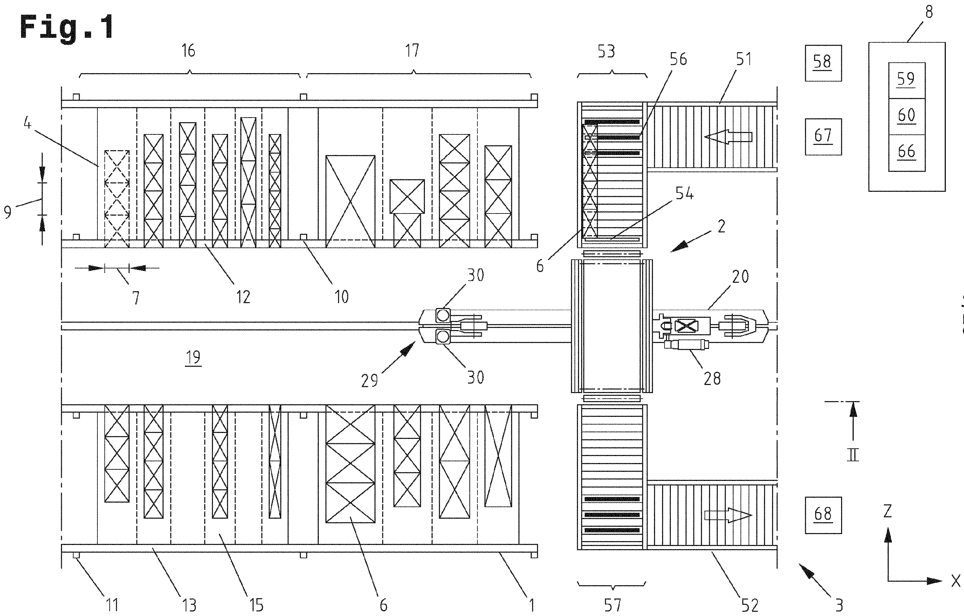

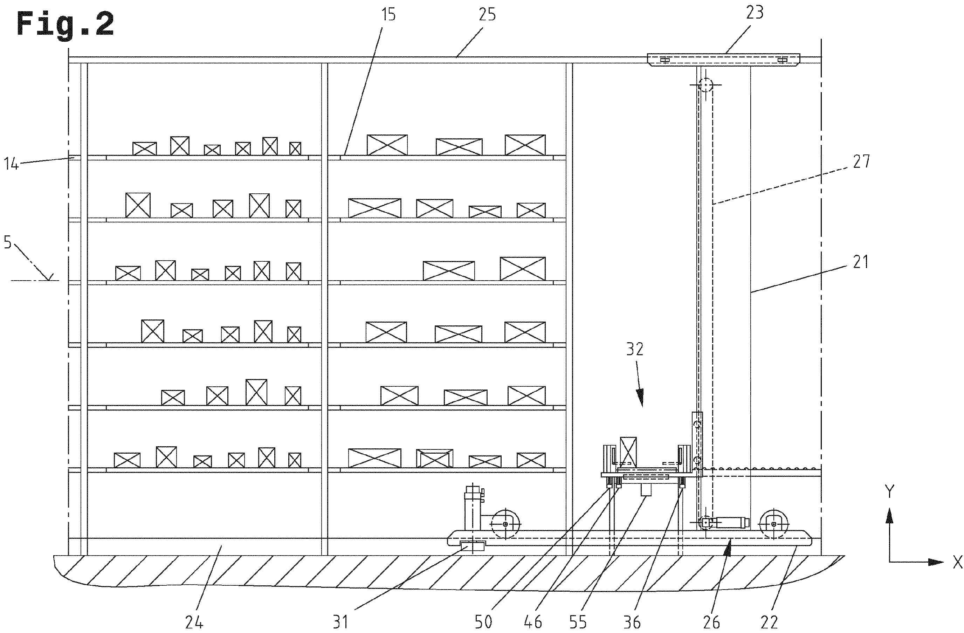

In den Fig. 1 und 2 ist ein Ausführungsbeispiel für ein Lagersystem gezeigt. Dieses umfasst ortsfest aufgestellte Lagerregale 1, zumindest eine automatisierte Stückgutaufnahmevorrichtung 2 und eine automatisierte Fördertechnik 3.

Die Lagerregale 1 bilden jeweils eine Vielzahl von Lagerkanälen 4 aus, die in übereinander liegenden Regalebenen 5 und je Regalebene 5 nebeneinander vorgesehen sind. Diese Lagerkanäle 4 können in einer Tiefenrichtung (z-Richtung) des Lagerregales 1 hintereinander Stückgüter 6 unterschiedlicher Breitenabmessung 7 lagern, wobei sich innerhalb eines Lagerkanals 4 nur Stückgüter 6 einer einzigen Breitenklasse befindet. Die Breitenklassen werden vor der Einlagerung der Stückgüter 6 von einer elektronischen Steuereinheit 8 definiert, wie noch beschrieben wird. Auch können diese Stückgüter 6 von unterschiedlicher Längenabmessung 9 sein. Wie nachfolgend noch beschrieben wird, werden in einem Lagerkanal 4 abhängig von einer Längenabmessung 9 der Stückgüter 6 entweder nur ein einziges (langes) Stückgut 6 oder mehrere (kürzere) Stückgüter 6 gelagert. Werden mehrere (kürzere) Stückgüter 6 in einem Lagerkanal 4 gelagert, so gehören diese aber einer einzigen Breitenklasse an. Die Stückgüter 6 können entweder jeweils dieselbe Längenabmessung 9 oder unterschiedliche Längenabmessungen 9 haben.

Die Stückgüter 6 können ohne zusätzlichem Ladehilfsmittel (LHM), wie Tablar oder Behälter, gefördert und gelagert werden. Die Stückgüter 6 sind insbesondere Packeinheiten, beispielweise Kartons. In den Kartons befinden sich Artikel, beispielweise aus der Textilbranche oder Lebensmittelindustrie.

Diese Stückgüter 6 haben eine Breitenabmessung 7 zwischen 150 mm und 1.200 mm und eine Längenabmessung 9 zwischen 200 mm und 2.000 mm. Nachfolgend sind exemplarisch einige der Breitenklassen B1..B10 gelistet.

| Breitenklasse | Breitenabmessung |
|---|---|
| B1 | 150 mm bis 200 mm |
| B2 | 201 mm bis 250 mm |
| B3 | 251 mm bis 300 mm |
| B4 | 301 mm bis 350 mm |
| B5 | 351 mm bis 400 mm |
| B6 | 401 mm bis 450 mm |
| B7 | 451 mm bis 500 mm |
| B8 | 501 mm bis 550 mm |
| B9 | 551 mm bis 600 mm |
| B10 | 601 mm bis 650 mm |

Wie aus dieser Auflistung ersichtlich, ist die Breitenabweichung von einer Ausgangsbreitenabmessung ca. 50 mm. Diese Breitenabweichung kann beispielweise auf die Qualität der Kartons und/oder den mechanischen Aufbau der noch näher zu beschreibenden Transportvorrichtung abgestimmt sein. Dies vor allem deswegen, da je nach Kundenanforderung unterschiedliche Kartons verwendet werden. So haben "minderwertige" Kartons eine geringere Eigensteifigkeit und neigen eher dazu verformt, insbesondere eingedrückt zu werden. In diesem Fall wird die Breitenabweichung größer sein, als bei Kartons "höherwertigerer" Qualität. Die Breitenabweichung kann erfahrungsgemäß zwischen 50 mm und 200 mm liegen. In Fig. 1 ist für eine der Breitenklassen gezeigt, dass die Stückgüter 6 innerhalb eines Lagerkanales 4 unterschiedliche Breitenabmessungen 7 aufweisen können, aber diese Stückgüter 6 dennoch dieser Breitenklasse angehören. Das erste Stückgut 6 hat beispielweise eine Breitenabmessung 7 von 560 mm und das zweite Stückgut 6 hat beispielweise eine Breitenabmessung 7 von 580 mm.

Nach gezeigter Ausführung umfassen die Lagerregale 1 jeweils vordere Regalsteher 10, hintere Regalsteher 11, an diesen befestigte vordere Längstraversen 12 und hintere Längstraversen 13 sowie einen je Regalebene 5 zwischen den Längstraversen 12, 13 angeordneten und an diesen befestigten Lagerboden 14. Der Lagerboden 14 bildet obenseitig eine Lagerfläche 15 aus, die sich je Regalebene 5 in Tiefenrichtung (z-Richtung) zwischen der vorderen Längstraverse 12 und hinteren Längstraversen 13 erstreckt. In Längenrichtung (x-Richtung) des Lagerregales 1 erstreckt sich die Lagerfläche 15 je Regalebene 5 zumindest zwischen den aufeinander folgenden vorderen Regalstehern 10 und hinteren Regalstehern 11.

Die beschriebenen Lagerkanäle 4 sind auf der Lagerfläche 15 ausgebildet, wobei der Begriff "Lagerkanal" so zu verstehen ist, dass dieser von der Steuereinheit 8 fiktiv als Stellfläche festgelegt wird. In Fig. 1 sind die Lagerkanäle 4 durch strichlierte Begrenzungslinien angedeutet. Abhängig von der Breitenklasse und damit der Breitenabmessung 7 der Stückgüter 6, welche in einem Lagerkanal 4 eingelagert werden sollen, wird auch eine Breite des (fiktiven) Lagerkanales 4 von der Steuereinheit 8 ermittelt.

Wie in Fig. 1 ersichtlich, können im Lagerregal 1 je Regalebene 5 Lagerzonen 16, 17 definiert werden, wobei die Steuereinheit 8 den Lagerzonen 16, 17 unterschiedliche Breitenklassen zuordnet, beispielweise einer ersten Lagerzone 16 die Breitenklassen B1..B6 und der zweiten Lagerzone 17 die Breitenklassen B7..B10. Alternativ kann in der ersten Lagerzone 16 aber auch nur eine Breitenklasse, beispielweise die Breitenklasse B1, und in der zweiten Lagerzone 17 eine andere Breitenklasse, beispielweise die Breitenklasse B4, gelagert werden.

Die in den Fig. 1 und 2 gezeigte Stückgutaufnahmevorrichtung 2 ist auf einem Tragrahmen 18 montiert und entlang der Lagerregale 1 in einer ersten Richtung (x-Richtung) sowie vertikal in einer zweiten Richtung (y-Richtung) bewegbar. Es können auch mehrere Stückgutaufnahmevorrichtungen 2 am Tragrahmen 18 montiert sein, wie dies jedoch nicht dargestellt ist. Die Stückgutaufnahmevorrichtung 2 ist in einer zwischen den Lagerregalen 1 ausgebildeten Regalgasse 19 (Fig. 1) angeordnet.

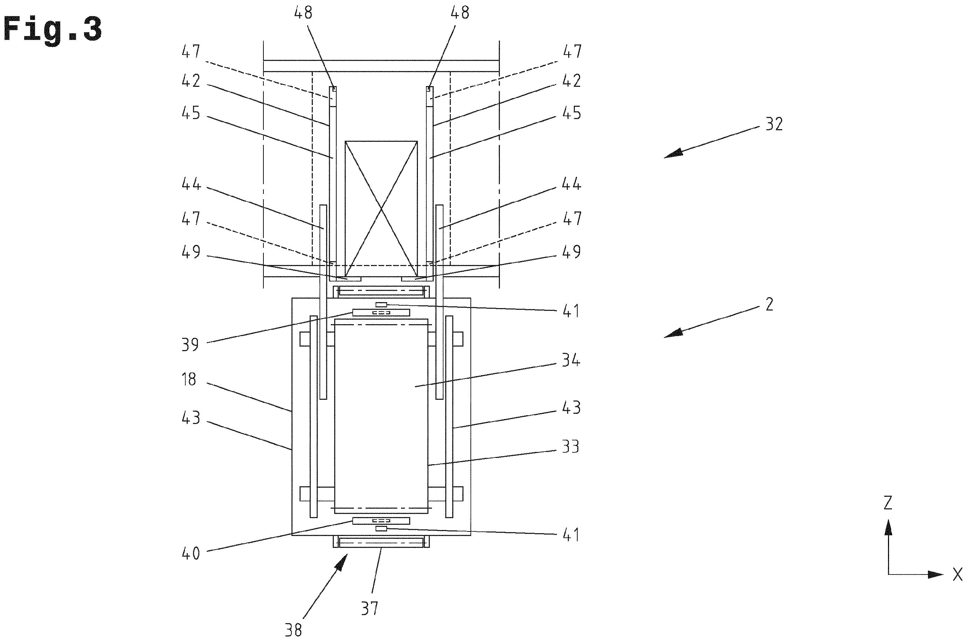

Der Tragrahmen 18 (Fig. 3) ist auf einer Verfahreinheit 20, insbesondere einem Förderfahrzeug gelagert. Die Verfahreinheit 20 ist als Regalförderfahrzeug gestaltet und umfasst einen vertikalen Mast 21, ein am Mastfuß befestigtes unteres Fahrwerk 22, ein am Mastkopf befestigtes oberes Fahrwerk 23. Das untere Fahrwerk 22 ist an einer unteren Fahrschiene 24 und das obere Fahrwerk 23 an einer oberen Führungsschiene 25 geführt.

Der Tragrahmen 18 ist über einen Hubantrieb 26 in y-Richtung höhenverstellbar am vertikalen Mast 21 gelagert. Der Hubantrieb 26 ist durch einen Zugmitteltrieb 27 und zumindest einen mit diesem gekuppelten elektrischen Antriebsmotor 28 (Fig. 1) gebildet. Der elektrische Antriebsmotor 28 ist mit der Steuereinheit 8 verbunden, um Steuersignale zu erhalten.

Die Verfahreinheit 20 ist über einen Fahrantrieb 29 in x-Richtung verfahrbar an den Führungsschienen 24, 25 gelagert. Das untere Fahrwerk 21 umfasst den Fahrantrieb 29, welcher durch zumindest einen elektrischen Antriebsmotor 30 und eine an diesen gekuppelte Antriebsrolle 31 gebildet ist. Bevorzugt sind zwei Antriebsmotoren 30 und zwei Antriebsrollen 31 vorgesehen. Der/die elektrische(n) Antriebsmotor(en) 30 ist/sind mit der Steuereinheit 8 verbunden, um Steuersignale zu erhalten.

Eine solche Verfahreinheit 20 ist beispielweise in der EP 2 419 365 B1 beschrieben.

Wie in den Fig. 1 bis 3 ersichtlich, ist auf dem in einer ersten Richtung (x-Richtung) und zweiten Richtung (y-Richtung) bewegbaren Tragrahmen 18 die Stückgutaufnahmevorrichtung 2 und eine in einer dritten Richtung (z-Richtung) in den Lagerkanal 4 ausfahrbare (automatisierte) Transportvorrichtung 32 zum Einlagern von Stückgütern 6 in die Lagerkanäle 4 und Auslagern von Stückgütern 6 aus den Lagerkanälen 4 montiert. Die Stückgutaufnahmevorrichtung 2 ist in den Fig. 1 und 2 aus Gründen der besseren Übersicht nur schematisch dargestellt.

Die Stückgutaufnahmevorrichtung 2, wie sie detaillierter mit ihren Funktionseinheiten in Fig. 3 dargestellt ist, kann eine motorisierte Fördervorrichtung 33 umfassen. Die Fördervorrichtung 33 ist beispielweise ein Gurtförderer oder Rollenförderer, dessen Transportfläche 34 in der Länge im Wesentlichen der maximalen Lagertiefe 35 (Fig. 8a) eines Lagerkanales 4 und in der Breite im Wesentlichen der maximalen Breitenabmessung 7 eines Stückgutes 6 entspricht. Der Gurtförderer wird von zumindest einem Antriebsmotor 36 (Fig. 2) angetrieben. Ist die Fördervorrichtung 33 ein Rollenförderer, können einige der Förderrollen oder sämtliche Förderrollen mit je einem elektrischen Antriebsmotor ausgestattet werden, wobei der Antriebsmotor innerhalb des Rollenkörpers angeordnet ist. Der/die elektrische(n) Antriebsmotor(en) des Gurtförderer/Rollenförderer ist/sind mit der Steuereinheit 8 verbunden, um Steuersignale zu erhalten.

Auch weist die Stückgutaufnahmevorrichtung 2 in den gegenüber liegenden Endbereichen der motorisierten Fördervorrichtung 33 angeordnete Unterstützungsmittel 37 auf. Die Unterstützungsmittel 37 sind jeweils durch eine motorisierte Fördervorrichtung 38 gebildet. Ein besonders einfacher Aufbau ergibt sich, da die motorisierten Fördervorrichtungen 38 entsprechend der Erfindung jeweils durch eine angetriebene Stützrolle gebildet sind. Diese angetriebene Stützrolle kann mit einem innerhalb dieser angeordneten elektrischen Antriebsmotor ausgestattet sein, wobei der Antriebsmotor innerhalb des Rollenkörpers angeordnet ist. Die elektrischen Antriebsmotoren sind mit der Steuereinheit 8 verbunden, um Steuersignale zu erhalten. Eine Transportfläche 34 der Fördervorrichtung 33 und eine (nicht eingetragene) Transportfläche der Fördervorrichtung 38 verlaufen in einer gemeinsamen Ebene.

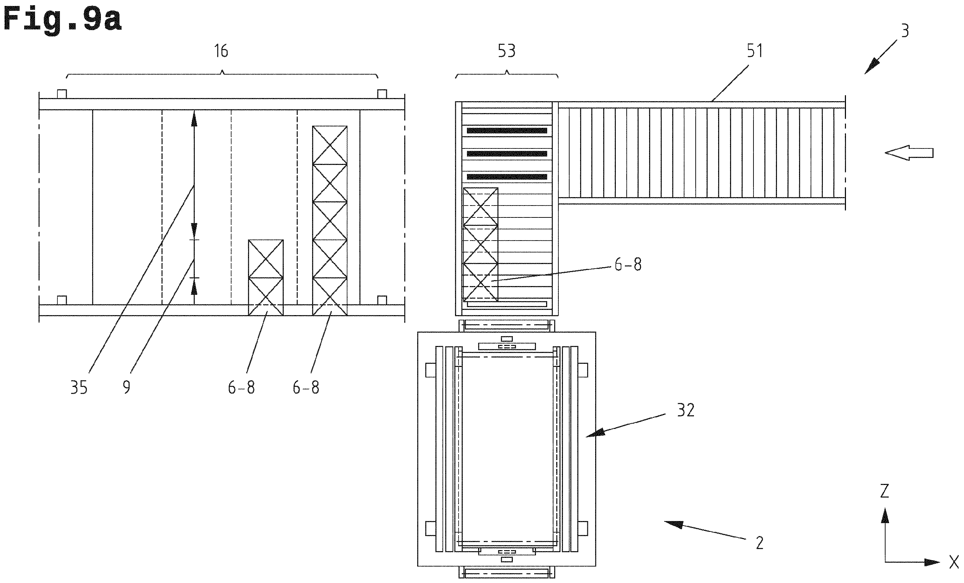

Das Unterstützungsmittel 37 dient der Lastabstützung der Stückgüter 6, wenn dieses zwischen der Stückgutaufnahmevorrichtung 2 und dem Lagerkanal 4 verlagert werden. Ist das Unterstützungsmittel 37 durch eine motorisierte Fördervorrichtung 38 gebildet, können die Stückgüter 6 auch mit einer Antriebskraft beaufschlagt werden. Die Antriebskraft ist derart gewählt, dass eine Vorschubgeschwindigkeit der Fördervorrichtung 38, insbesondere der motorisierten Stützrolle, höher ist als eine Vorschubgeschwindigkeit der Fördervorrichtung 33. Dadurch kann sichergestellt werden, dass die Stückgüter 6 auf der Stückgutaufnahmevorrichtung 2 zuverlässig dicht aneinander gereiht werden können, wenn beispielweise ein Stückgut 6 oder mehrere Stückgüter 6 aus dem Lagerkanal 4 über die Transportvorrichtung 32 ausgelagert und gegen ein Stückgut 6 oder ein Stückgut 6 einer (Teil)Stückgutgruppe 61 auf der Stückgutaufnahmevorrichtung 2 positioniert werden (siehe Fig. 9a-9f).

Auch kann die Stückgutaufnahmevorrichtung 2 in den gegenüber liegenden Endbereichen der motorisierten Fördervorrichtung 33 angeordnete Anschlagelemente 39, 40 aufweisen. Diese sind zwischen einer aus dem Transportweg der Stückgüter 6 entlang der Fördervorrichtung 33 herausbewegten Ausgangsstellung und einer in den Transportweg der Stückgüter 6 entlang der Fördervorrichtung 33 hineinbewegten Betätigungsstellung verstellbar am Tragrahmen 18 gelagert. Die Anschlagelemente 39, 40 sind jeweils mit einem (in Fig. 2 schematisch angedeuteten) Stellantrieb gekuppelt, welcher einen Antriebsmotor umfasst. Die Antriebsmotoren sind mit der Steuereinheit 8 verbunden, um Steuersignale zu erhalten.

Ferner kann die Stückgutaufnahmevorrichtung 2 auch eine Sensorik aufweisen, die dazu eingerichtet ist, die Stückgüter 6 auf der Stückgutaufnahmevorrichtung 2 zu erfassen. Diese ist mit der Steuereinheit 8 verbunden, um eine Istlänge der Stückgutgruppe auf der Stückgutaufnahmevorrichtung 2 zu ermitteln. Die Sensorik ist nach gezeigter Ausführung durch in den gegenüberliegenden Endbereichen der Fördervorrichtung 33 angeordnete Messeinrichtungen 41 gebildet, die eine Distanz zum jeweils vordersten Stückgut 6 der Stückgutgruppe erfassen. Die Steuereinheit 8 ermittelt aus den Messwerten eine Istlänge der Stückgutgruppe, welche sich nach der Übernahme auf der Stückgutaufnahmevorrichtung 2 befindet. Die Messeinrichtungen 41 sind opto-elektronische Messsysteme, insbesondere Laser-oder Infrarot-Messsysteme. Andererseits kann die Sensorik auch ein Bildverarbeitungssystem mit einer Kamera sein.

Die gezeigte Transportvorrichtung 32 ist gegenüber der Stückgutaufnahmevorrichtung 2 nach beiden Richtung ausfahrbar, sodass in die zu beiden Seiten der Stückgutaufnahmevorrichtung 2 angeordneten Lagerregale 1 Stückgüter 6 eingelagert bzw. Stückgüter 6 ausgelagert werden können. Die Transportvorrichtung 32 kann parallel zueinander auf dem Tragrahmen 18 angeordnete Teleskopiereinheiten 42 umfassen, welche jeweils einen Grundrahmen 43 und relativ gegenüber dem Grundrahmen 43 horizontal in einer Richtung (z-Richtung) synchron ein- bzw. ausfahrbaren Schlitten 44, 45 aufweisen. Die Teleskopiereinheiten 42 bilden Teleskoparme. Konkret ist der erste Schlitten 44 auf dem Grundrahmen 43 verschiebbar gelagert und der zweite Schlitten 45 ist am ersten Schlitten 44 verschiebbar gelagert. Der erste Schlitten 44 kann mit Hilfe einer (nicht dargestellten) Antriebsvorrichtung relativ gegenüber dem Grundrahmen 43, beispielweise einer Antriebsketten- und Zahnleistenanordnung gegenüber dem Grundrahmen 43 bewegt werden. Der Kettentrieb ist an einen elektrischen Antriebsmotor 46 (Fig. 2) gekuppelt. Der elektrische Antriebsmotor 46 ist mit der Steuereinheit 8 verbunden, um Steuersignale zu erhalten. Ein (nicht dargestellter) erster Riemen ist um eine am ersten Schlitten 44 gelagerte erste Rolle umgelenkt und mit seinem ersten Ende am Grundrahmen 43 und mit seinem zweiten Ende am zweiten Schlitten 45 befestigt. Ein (nicht dargestellter) zweiter Riemen ist um eine am ersten Schlitten 44 gelagerte zweite Rolle umgelenkt und mit seinem ersten Ende am Grundrahmen 43 und mit seinem zweiten Ende am zweiten Schlitten 45 befestigt. Wird der erste Schlitten 44 durch die Antriebsvorrichtung bewegt, so wird auch der zweite Schlitten 45 über die Riemen mit bewegt, also ein- bzw. ausgefahren.

Der zweite Schlitten 45 umfasst nach gezeigtem Ausführungsbeispiel Antriebsmotoren 47 für Transportorgane 48, 49 zum Transport von Stückgütern 6 zwischen dem Lagerkanal 4 und der Stückgutaufnahmevorrichtung 2. Die Transportorgane 48, 49 sind in den gegenüber liegenden Endbereichen der zweiten Schlitten 45 angeordnet, wobei jedes Transportorgan 48, 49 (Mitnahmeorgan) mit einem Antriebsmotor 47 gekuppelt und über diesen zwischen einer Ausgangsstellung und Betätigungsstellung bewegbar ist. In der Ausgangsstellung sind die Transportorgane 48, 49 aus einem Transportweg für die Stückgüter 6 heraus bewegt, sodass die Stückgüter 6 die Transportorgane 48, 49 passieren kann, und in der Betätigungsstellung sind die Transportorgane 48, 49 in den Transportweg für die Stückgüter 6 hinein bewegt, sodass die Transportorgane 48, 49 die Stückgüter 6 formschlüssig hintergreifen.

Die Teleskopiereinheiten 42 sind bevorzugt auch über einen Stellantrieb relativ zueinander und in einer x-Richtung verstellbar am Tragrahmen 18 gelagert. Auf diese Weise kann ein Abstand zwischen den Teleskopiereinheiten 42 variabel und auf die jeweiligen Breitenklassen B1..B10 eingestellt werden. Der Stellantrieb umfasst zumindest einen elektrischen Antriebsmotor 50, welcher mit der Steuereinheit 8 verbunden ist, um Steuersignale zu erhalten.

Der Aufbau dieser Teleskopiereinheiten 42 und die Verstellmechanismen für die Abstandverstellung und Teleskopierbewegung sind im Detail in der US 6,923,612 B2 beschrieben .

Wie in den Fig. 1 und 2 ersichtlich, ist eine automatisierte Fördertechnik 3 vorgesehen, welche eine erste Fördervorrichtung 51 zum Antransport von Stückgütern 6 zur Stückgutaufnahmevorrichtung 2 und eine zweite Fördervorrichtung 52 zum Abtransport von Stückgütern 6 von der Stückgutaufnahmevorrichtung 2 umfasst. Die erste Fördervorrichtung 51 schließt an einen dieser in Förderrichtung vorgelagerten Ausschleuspunkt 67 an. Die zweite Fördervorrichtung 51 schließt an einen dieser in Förderrichtung nachgelagerten Einschleuspunkt 68 an. Die zweite Fördervorrichtung 52 führt zu einem nicht gezeigten logistischen Arbeitsprozess, wo beispielweise Kundenaufträge automatisch oder manuell kommissioniert, oder konsolidiert werden. Die erste Fördervorrichtung 51 bildet einen Bereitstellplatz 53 aus, auf welchem Stückgüter 6 einer Breitenklasse, beispielweise die Breitenklasse B2, zusammengestellt werden. In Fig. 1 sind die Stückgüter 6 dieser Breitenklasse gegen ein Anschlagelement 54 und dicht aneinander liegend zu einer Stückgutgruppe positioniert. Das Anschlagelement 54 ist der ersten Fördervorrichtung 51 in einem stromabwärts liegenden Endbereich zugeordnet und mittels einem Stellantrieb 55 (Fig. 2), beispielweise einem pneumatisch betätigten Hubzylinder, zwischen einer aus dem Transportweg der Stückgüter 6 entlang der Fördervorrichtung 51 herausbewegten Ausgangsstellung und einer in den Transportweg der Stückgüter 6 entlang der Fördervorrichtung 51 hineinbewegten Betätigungsstellung verstellbar an einem Tragrahmen gelagert.

Die erste Fördervorrichtung 51 zum Antransport von Stückgütern 6 bildet in Förderrichtung einen ersten Förderabschnitt, einen zweiten Förderabschnitt und einen dritten Förderabschnitt aus. Im ersten Förderabschnitt ist ein Bereitstellplatz 53 ausgebildet. Der Bereitstellplatz 53 ist beispielweise durch einen Rollenförderer, Gurtförderer und dgl. gebildet. Ist der Bereitstellplatz 53 ein Rollenförderer, so können einige oder sämtliche Förderrollen so genannte Motorrollen sein. Im zweiten Förderabschnitt ist beispielsweise ein heb- und senkbarer Riemenumsetzer 56 angeordnet, welcher den ersten Förderabschnitt und dritten Förderabschnitt fördertechnisch miteinander verbindet. Der dritte Förderabschnitt ist beispielweise durch einen Rollenförderer, Gurtförderer und dgl. gebildet.

Die zweite Fördervorrichtung 52 zum Antransport von Stückgütern 6 bildet in Förderrichtung einen ersten Förderabschnitt, einen zweiten Förderabschnitt und einen dritten Förderabschnitt aus. Im ersten Förderabschnitt ist ein Übernahmeplatz 57 ausgebildet. Der Übernahmeplatz 57 ist beispielweise durch einen Rollenförderer, Gurtförderer und dgl. gebildet. Ist der Übernahmeplatz 57 ein Rollenförderer, so können einige oder sämtliche Förderrollen so genannte Motorrollen sein. Im zweiten Förderabschnitt ist beispielsweise ein heb- und senkbarer Riemenumsetzer 56 angeordnet, welcher den ersten Förderabschnitt und dritten Förderabschnitt fördertechnisch miteinander verbindet. Der dritte Förderabschnitt ist beispielweise durch einen Rollenförderer, Gurtförderer und dgl. gebildet.

Wie in Fig. 1 eingetragen, ist entlang der automatisierten Fördertechnik 3 eine Messstation 58, insbesondere optische Messstation angeordnet, an welcher bevorzugt jedes Stückgut 6 berührungslos vermessen wird. Bevorzugt befindet sich die Messstation 58 vor einem Ausschleuspunkt 67, an dem Stückgüter 6 auf die erste Fördervorrichtung 51 abgegeben werden.

Bevorzugt wird die (maximale) Breitenabmessung 7 und (maximale) Längenabmessung 9 eines Stückgutes 6 erfasst. Denkbar ist auch eine Volumenmessung der Stückgüter 6. Es wäre aber auch möglich, dass von den Stückgütern 6 lediglich die Breitenabmessung 7 ermittelt wird. Die Breitenabmessung 7 entspricht dabei jener Abmessung eines Stückgutes 6, welche quer zur Längserstreckung des Lagerkanales 4 verläuft, wenn das Stückgut 6 im Lagerkanal 4 eingelagert wurde. Die Längenabmessung 9 entspricht dabei jener Abmessung eines Stückgutes 6, welche in Richtung der Längserstreckung des Lagerkanales 4 verläuft, wenn das Stückgut 6 im Lagerkanal 4 eingelagert wurde.

Die Messstation 58 ist mit der Steuereinheit 8 verbunden, um dieser an ein elektronisches Auswertemodul 59 die Istwerte der Breitenabmessung 7 oder Breitenabmessung 7 und Längenabmessung 9 zu übermitteln. Die Steuereinheit 8 steuert basierend auf der erfassten Breitenabmessung 7 oder Breitenabmessung 7 und Längenabmessung 9 die Stückgutaufnahmevorrichtung 2, die Transportvorrichtung 32 und/oder die Fördervorrichtung 51 zum Antransport von Stückgütern 6 zur Stückgutaufnahmevorrichtung 2 an, um die Stückgüter 6 selektiv nach Breitenklassen zu zumindest einem Bereitstellplatz 53 anzufördern und um die bereitgestellten Stückgüter 6 auf der Stückgutaufnahmevorrichtung 2 aufzunehmen und die auf der Stückgutaufnahmevorrichtung 2 übernommenen Stückgüter 6 in einen Lagerkanal 4 einer definierten Breitenklasse einzulagern.

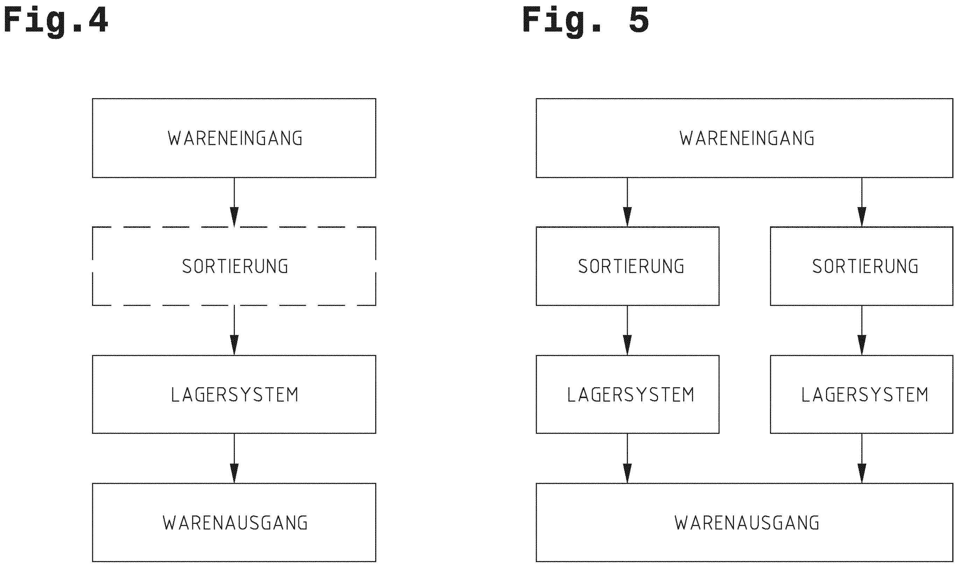

Die Fig. 4 bis 6 zeigen Blockdiagramme unterschiedlicher Anordnungen von Lagersystemen. Fig. 4 zeigt ein Lagersystem gemäß Fig. 1 mit zwei Lagerregalen 1 und zumindest einer Stückgutaufnahmevorrichtung 2, wobei das Lagersystem an einen Wareneingang und einen Warenausgang anschließt. Die Stückgüter 6 werden am Wareneingang angeliefert und mittels der ersten Fördervorrichtung 51 zum Lagersystem gefördert, wo sie von der Stückgutaufnahmevorrichtung 2 aufgenommen und eingelagert werden. In der Textilbranche oder Lebensmittelbranche ist es üblich das relativ große Mengen gleichartiger Stückgüter 6 angeliefert werden. Der Begriff "gleichartig" ist hierbei so zu verstehen, dass nicht unbedingt die Artikel gleich sein müssen, aber deren Breitenabmessungen 7 und/oder Längenabmessungen 9. Betrifft die Warenlieferung beispielweise Hemden, so können diese größenmäßig sortiert sein. Die ersten Kartons enthalten die Hemden der Größe X-Large, die zweiten Kartons enthalten die Hemden der Größe Large, die dritten Kartons enthalten die Hemden der Größe Medium und die vierten Kartons enthalten die Hemden der Größe Small. Alle Kartons sind jedoch von gleicher Breitenabmessung und Längenabmessung.

Wie aus diesem Beispiel klar wird, ist über einen Zeitraum eine enorm hohe Anzahl an gleichartigen Kartons, daher gleichartigen Stückgüter 6 vorhanden, welche möglichst rasch eingelagert werden müssen, um den Wareneingang nicht unnötig lang zu blockieren. Eine Sortierung innerhalb dieser Warengruppe ist vor dem Einlagern nicht erforderlich, da die Stückgüter 6 alle derselben Breitenklasse angehören. Der optionale Schritt des Sortierens ist in Fig. 4 durch strichlierte Linien angedeutet. Erst wenn die nächste Warengruppe angeliefert wird, ist sicherzustellen, dass es zu keiner Mischung zwischen den Warengruppen kommt. Daher müssen die Stückgüter 6 wiederum selektiv nach Breitenklassen zum zumindest einen Bereitstellplatz zugeführt werden, wie nachfolgend beschrieben.

Die Kartons können vom Lieferanten unmittelbar auf zumindest einer (nicht gezeigten) Aufgabestation, welche an die erste Fördervorrichtung 51 anschließt, abgegeben und von der ersten Fördervorrichtung 51 abgefördert werden. Anderseits können die Kartons auch auf einem Ladungsträger, beispielsweise auf einer Palette angeliefert werden, sodass die auf dem Ladungsträger gestapelten Kartons vereinzelt und auf die erste Fördervorrichtung 51 übergeben werden müssen. Die Vereinzelung kann manuell oder automatisch erfolgen.

Werden von einem Lieferanten unterschiedliche Stückgüter 6, beispielweise Hemden, Pullover und T-Shirt etc., angeliefert, daher Kartons unterschiedlicher Breitenabmessungen 7 und/oder Längenabmessungen 9, so ist eine Sortierung erforderlich. Die Sortierung kann manuell oder automatisch erfolgen. Ist eine automatische Sortierung vorgesehen, so weist die Fördertechnik 3 eine (nicht dargestellte) Sortiervorrichtung auf, mittels welcher die Stückgüter 6 zumindest nach deren Breitenabmessungen 7 sortiert und mittels der ersten Fördervorrichtung 51 in der sortierten Reihenfolge dem Bereitstellplatz 53 zugeführt werden.

Bevorzugt ist eine solche automatische Sortiervorrichtung in Förderrichtung der Stückgüter 6 entlang der ersten Fördervorrichtung 51 nach der Messstation 58 angeordnet.

Andererseits ist es auch möglich, dass der Lieferant die unterschiedlichen Stückgüter 6 größenabhängig nach Breitenabmessung 7 sortiert auf die erste Fördervorrichtung 51 übergibt. In diesem Fall ist eine gesonderte Sortiervorrichtung vor dem Einlagern nicht erforderlich.

Sohin werden unterschiedliche Breitenklassen aufeinander folgend am Bereitstellplatz 53 bereitgestellt. Beispielweise werden am Bereitstellplatz 53 vorerst Stückgüter 6 einer ersten Breitenklasse in entsprechender Anzahl als Stückgutgruppe und darauf folgend Stückgüter 6 einer anderen Breitenklasse in entsprechender Anzahl als Stückgutgruppe bereitgestellt.

Die beschriebene Sortierung kann auch nach Breitenabmessungen 7 und Längenabmessungen 9 der Stückgüter 6 erfolgen, wobei vorrangig nach Breitenabmessung 7 zu sortieren ist, sodass innerhalb einer Stückgutgruppe nur Stückgüter 6 einer einzigen Breitenklasse enthalten sind, während die Längenabmessungen 9 der Stückgüter 6 variieren kann.

Mit anderen Worten erweist es sich also von Vorteil, wenn die Stückgüter 6 zumindest abhängig von deren Breitenabmessung 7 selektiv dem Bereitstellplatz 53 zugeführt werden. Daher werden auf dem Bereitstellplatz 53 aufeinander folgend vorerst die Gruppe von Stückgütern 6 einer ersten Breitenklasse und danach eine Gruppe von Stückgütern 6 einer zweiten Breitenklasse bereitgestellt. Die erste Stückgutgruppe umfasst dabei zumindest zwei Stückgüter 6 derselben ersten Breitenabmessung 7 und die zweite Stückgutgruppe umfasst dabei zumindest zwei Stückgüter 6 derselben zweiten Breitenabmessung 7.

Ist ein Kundenauftrag abzuarbeiten, erhält die Steuereinheit 8 einen Kommissionierauftrag bzw. Auslagerauftrag, die ihrerseits die Stückgutaufnahmevorrichtung 2 und Transportvorrichtung 32 ansteuert, um die gewünschten Stückgüter 6 zu diesem Auftrag auszulagern. Die Stückgutaufnahmevorrichtung 2 fördert die Stückgüter 6 zum Übernahmeplatz 57, wo diese von der zweiten Fördervorrichtung 52 abtransportiert werden.

Nach einer anderen Ausführung ist auch eine automatische oder manuelle Sortierung nach Artikeln und Artikeltyp möglich.

Die Artikel sind beispielweise Hemden, Pullover, T-Shirts und dgl. Mit dem Artikeltyp wird beispielweise die Größe, Farbe und dgl. definiert. So kann der Artikel "Hemd" der Größe X-Large und Farbe weiß ein erstes Stückgut 6 bilden, der Artikel "Hemd" der Größe Large und Farbe weiß ein zweites Stückgut 6 bilden usw., der Artikel "Hemd" der Größe X-Large und Farbe schwarz ein drittes Stückgut 6 bilden, der Artikel "Hemd" der Größe Large und Farbe schwarz ein viertes Stückgut 6 bilden usw. Die Stückgüter 6 mit dem Artikel "Hemd" haben in diesem Fall jeweils die gleichen Breitenabmessungen 7 und Längenabmessungen 9. Es ist aber eine Sortierung dieser (gleichen) Stückgüter 6 nach Artikeltyp möglich. Beispielweise werden vorerst alle ersten Stückgüter 6 und danach alle zweiten Stückgüter 6 usw. an die Fördertechnik 3 übergeben.

Der Artikel "Pullover" der Größe X-Large und Farbe weiß kann ein fünftes Stückgut 6 bilden, der Artikel "Pullover" der Größe Large und Farbe weiß kann ein sechstes Stückgut 6 bilden usw. Die fünften / sechsten Stückgüter 6 mit dem Artikel "Pullover" haben die gleichen Breitenabmessungen 7 und Längenabmessungen 9, jedoch eine andere Breitenabmessung 7 und Längenabmessung 9 als die ersten / zweiten / dritten / vierten Stückgüter 6 mit dem Artikel "Hemd". Es ist aber eine Sortierung dieser (gleichen) fünften / sechsten Stückgüter 6 nach Artikeltyp möglich. Beispielweise werden vorerst alle fünften Stückgüter 6 und danach alle sechsten Stückgüter 6 usw. an die Fördertechnik 3 übergeben. Die ersten / zweiten / dritten / vierten Stückgüter 6 und fünften / sechsten Stückgüter 6 werden jedoch von der Fördertechnik 3 selektiv zum Bereitstellplatz 53 zugeführt.

Fig. 5 zeigt die Aneinanderreihung von mehreren Lagersystemen gemäß Fig. 1 mit je Lagersystem zwei Lagerregalen 1 und zumindest einer Stückgutaufnahmevorrichtung 2, wobei die Lagersysteme an einen gemeinsamen Wareneingang und einen gemeinsamen Warenausgang anschließen. Die Stückgüter 6 werden am Wareneingang angeliefert und jeweils mittels der ersten Fördervorrichtung 51 zum jeweiligen Lagersystem gefördert, wo sie von der Stückgutaufnahmevorrichtung 2 aufgenommen und eingelagert werden, wie oben in Fig. 4 beschrieben.

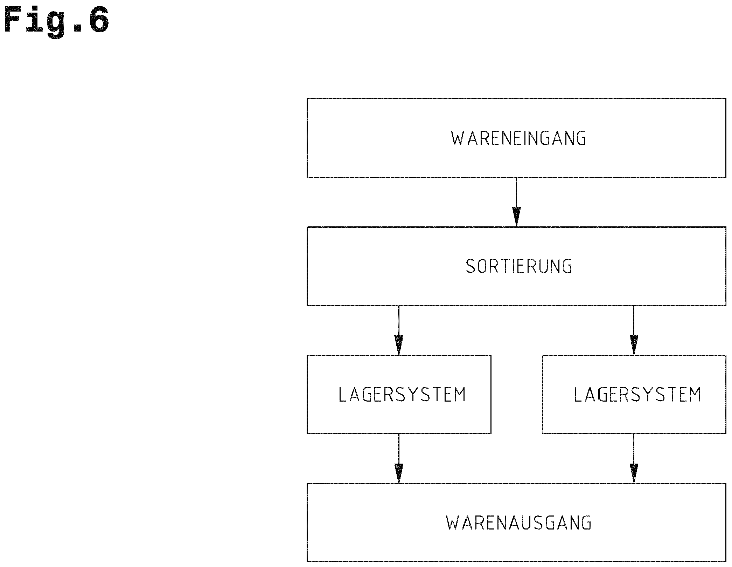

Fig. 6 zeigt die Aneinanderreihung von mehreren Lagersystemen gemäß Fig. 1 mit je Lagersystem zwei Lagerregalen 1 und zumindest einer Stückgutaufnahmevorrichtung 2, wobei die Lagersysteme an einen gemeinsamen Wareneingang und einen gemeinsamen Warenausgang sowie an eine die Fördertechnik 3 aufweisende gemeinsame Sortiervorrichtung anschließen.

Die Sortiervorrichtung umfasst ein geschlossenes Verteilsystem (Förderumlaufbahn) mit einem ersten Förderabschnitt, einen zweiten Förderabschnitt und diese verbindende dritte Förderabschnitte. An den ersten Förderabschnitt schließen eine Vielzahl von Aufgabestationen an, sodass die von Lieferanten an den Aufgabestationen abgegebenen und gegebenenfalls unterschiedlichen Stückgüter 6 bzw. Kartons in das Verteilsystem eingeschleust werden. Anderseits können die Kartons auch auf Ladungsträger, beispielsweise Paletten angeliefert werden, sodass die auf den Ladungsträgern gestapelten Kartons vereinzelt und auf das Verteilsystem eingeschleust werden. Die Vereinzelung kann manuell oder automatisch erfolgen.

An den zweiten Förderabschnitt schließen die Fördervorrichtung 51 des ersten Lagersystemes und die Fördervorrichtung 51 des zweiten Lagersystemes an.

Sind auf das Verteilsystem (von mehreren Lieferanten) unterschiedliche Stückgüter 6 abgegeben worden, daher Kartons unterschiedlicher Breitenabmessungen 7 und/oder Längenabmessungen 9, so erfolgt eine Sortierung durch das Verteilsystem.

Das Verteilsystem kann unterschiedliche Stückgüter 6 zumindest nach deren Breitenabmessungen 7 sortiert der Fördervorrichtung 51 des ersten Lagersystemes und Fördervorrichtung 51 des zweiten Lagersystemes zuführen. Sohin werden unterschiedliche Breitenklassen aufeinander folgend am ersten Bereitstellplatz 53 des ersten Lagersystemes und unterschiedliche Breitenklassen aufeinander folgend am zweiten Bereitstellplatz 53 des zweiten Lagersystemes bereitgestellt. Die Sortierung kann auch so gesteuert werden, dass am ersten Bereitstellplatz 53 des ersten Lagersystemes und am zweiten Bereitstellplatz 53 des zweiten Lagersystemes parallel Stückgüter 6 derselben Breitenklassen bereitgestellt werden. Damit wird in den Lagersystemen eine gleichmäßige Verteilung der unterschiedlichen Stückgüter 6 erreicht, sodass Kommissionieraufträge parallel von mehreren Stückgutaufnahmevorrichtungen 2 abgearbeitet werden können. Anderenfalls ist es aber auch denkbar, dass in den Lagersystemen unterschiedliche Breitenklassen gelagert werden, beispielweise die Breitenklassen B1..B5 im ersten Lagersystem und die Breitenklassen B6..B10 im zweiten Lagersystem. Eine solche Anwendung ist von Vorteil, wenn in einem der Lagersysteme (erstes Lagersystem) eine höhere Artikelvielfalt aber geringere Umschlaghäufigkeit und in einem anderen der Lagersysteme (zweites Lagersystem) eine vergleichsweise geringe Artikelvielfalt bei höherer Umschlaghäufigkeit vorliegt. Grundsätzlich kann durch die Parallelisierung der Einlagervorgänge eine besonders hohe Gesamtleistung erreicht.

Die beschriebene Sortierung kann auch nach Breitenabmessungen 7 und Längenabmessungen 9 der Stückgüter 6 erfolgen, wobei vorrangig nach Breitenabmessung 7 zu sortieren ist, sodass am ersten Bereitstellplatz 53 innerhalb einer Stückgutgruppe nur Stückgüter 6 einer einzigen Breitenklasse, beispielweise die Breitenklasse B2 enthalten sind, während die Längenabmessungen 9 der Stückgüter 6 variieren kann, und am zweiten Bereitstellplatz 53 innerhalb einer Stückgutgruppe nur Stückgüter 6 einer einzigen Breitenklasse, beispielweise die Breitenklasse B6 enthalten sind, während die Längenabmessungen 9 der Stückgüter 6 variieren kann.

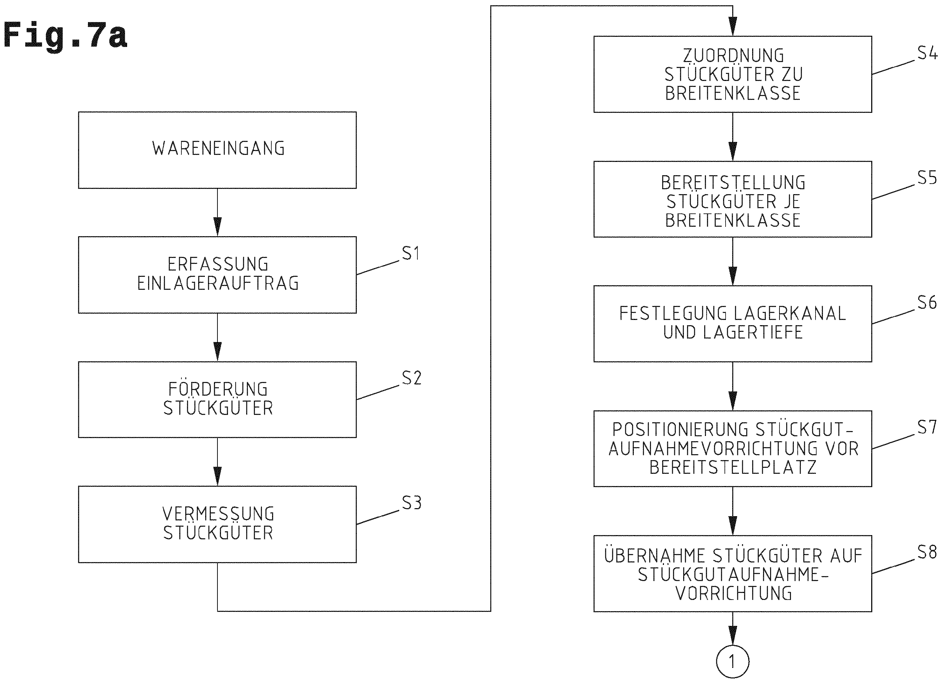

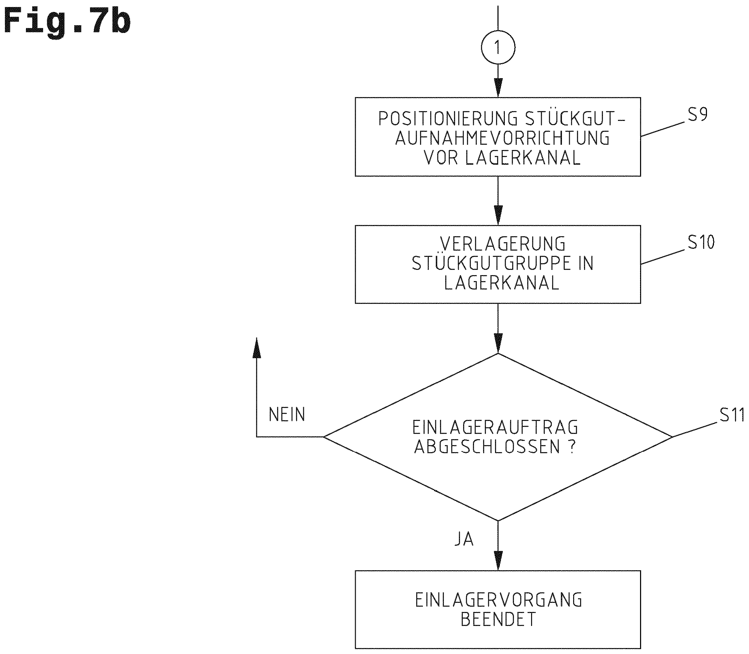

In den Fig. 7a, 7b und 8a-8e ist der Verfahrensablauf zum Einlagern von Stückgütern 6 in zumindest einen von mehreren Lagerkanälen 4 anhand eines Flussdiagrammes und Sequenzablaufes gezeigt.

Die Stückgüter 6 werden am Wareneingang angeliefert. In einem Schritt S1 werden Einlageraufträge elektronisch erfasst, beispielweise an einer Eingabevorrichtung, beispielweise einem Computer. Die Einlageraufträge umfassen nach diesem Ausführungsbeispiel unterschiedliche Stückgüter 6. Die Einlageraufträge werden fortlaufend an die Steuereinheit 8 übermittelt, die ihrerseits die Steuerung der Fördertechnik, Stückgutaufnahmevorrichtung 2 und Transportvorrichtung 32 koordiniert.

Die Stückgüter 6 werden von der Fördertechnik vom Wareneingang zum Lagersystem gefördert, Schritt S2. Bevor die Stückgüter 6 dem Bereitstellplatz 53 zugeführt werden, können diese in einem (optionalen) Schritt S3 in oben beschriebener Weise vermessen werden. Das Auswertemodul 59 (Fig. 1) der Steuereinheit 8 ermittelt bevorzugt zu jedem Stückgut 6 den Istwert der Breitenabmessung 7 oder die Istwerte der Breitenabmessung 7 und Längenabmessung 9. Dabei handelt es sich um die maximale Breitenabmessung 7 und gegebenenfalls maximale Längenabmessung 9 (entlang einer Umfangslinie) des Stückgutes 6. Alternativ kann der Steuereinheit 8 zu jedem Stückgut 6 auch der Sollwert der Breitenabmessung 7 oder die Sollwerte der Breitenabmessung 7 und Längenabmessung 9 übermittelt werden, welche als Stammdaten in einer Datenbank abrufbar hinterlegt sind. In diesem Fall genügt es, wenn die Stückgüter 6 anhand eines Datenträgers, beispielweise Barcode oder einem RFID (Radio Frequency Identification Device) und eine Stückgut-Identifikationseinrichtung, beispielsweise ein Lesegerät oder Bildverarbeitungssystem identifiziert werden. Insbesondere wird aus einem vom Lieferanten auf jeden Karton (Packeinheit) oder einen Ladungsträger (beispielsweise Palette), auf welchem gleichartige Stückgüter 6 gestapelt sind, angebrachten Datenträger ein Identifikationscode ausgelesen, insbesondere ein Barcode gescannt. Anhand dieses Identifikationscodes wird auf die Datenbank und die gespeicherten Sollwerte der Breitenabmessung 7 oder die Sollwerte der Breitenabmessung 7 und Längenabmessung 9 der Stückgüter 6 zurückgegriffen.

Werden von dem Stückgut 6 der Istwert der Breitenabmessung 7 oder die Istwerte der Breitenabmessung 7 und Längenabmessung 9 erfasst, so können auch Maß- bzw. Formabweichungen der Kartons (Packeinheiten) in der Ansteuerung der Transportvorrichtung 32 und/oder Fördertechnik berücksichtigt werden.

Dies erweist sich beispielweise auch von Vorteil, wenn durch die Steuereinheit 8 festgestellt wird, dass die Stückgüter 6 zu einem Einlagerauftrag nicht in der gewünschten Anzahl in einen Lagerkanal 4 eingelagert werden können, da die verfügbare Lagertiefe 35 zu gering ist. So wäre es möglich Stückgüter 6 einer Breitenklasse und in einer berechneten Anzahl in einen Lagerkanal 4 einzulagern, wenn die Stückgüter 6 eine Längenabmessung 9 aufweisen, die als Sollwerte in den Stammdaten hinterlegt sind. Beispielweise könnten gemäß den Sollwerten für die Längenabmessung 9 je Stückgut 6, in einem Lagerkanal 4 die Stückgüter 6 einer Breitenklasse B6 in einer Anzahl von vier Stück eingelagert werden. Das Auswertemodul 59 der Steuereinheit 8 hat jedoch die Istwerte der Stückgüter 6 ausgewertet und eine Istlänge der "geplanten" Stückgutgruppe ermittelt, welche der maximalen verfügbaren Lagertiefe 35 entspricht bzw. diese überschreitet. Es wäre demnach die Einlagerung der "geplanten" Stückgutgruppe mit den vier Stückgütern 6 der Breitenklasse B6 nicht möglich, sondern nur von drei Stückgütern 6, wie in Fig. 1 in strichlierten Linien eingetragen. Die Steuereinheit 8 kann nun die Fördertechnik 3 derart ansteuern, dass am Ausschleuspunkt 67 nur eine "angepasste" Anzahl an Stückgütern 6 auf die erste Fördervorrichtung 51 ausgeschleust werden, daher drei Stückgüter 6.

Im Schritt S4 erfolgt die Zuordnung der Stückgüter 6 je nach Breitenabmessung 7 zu einer entsprechenden Breitenklasse B1..B10. Für diese Zuordnung können entweder die Istwerte der Breitenabmessung 7 oder Sollwerte der Breitenabmessung 7 herangezogen werden. Wie oben beschrieben wird ein Stückgut 6 mit der Breitenabmessung 7 zwischen 201 mm und 250 mm beispielweise der Breitenklasse B2, ein Stückgut 6 mit der Breitenabmessung 7 zwischen 501 mm und 550 mm beispielweise der Breitenklasse B8 usw. zugeordnet. Diese Zuordnung erfolgt automatisiert von einem Analysemodul 60 bzw. einer Logik der Steuereinheit 8. Die Breitenklassen B1..B10 werden vor Inbetriebnahme des Lagersystemes festgelegt und an der Steuereinheit 8 erfasst.

Der erste Einlagerauftrag umfasst die Stückgüter 6, welche der zweiten Breitenklasse B2 zugeordnet wurden, und der zweite Einlagerauftrag umfasst die Stückgüter 6, welche der achten Breitenklasse B8 zugeordnet wurden, enthalten. Beispielsweise umfasst der erste Einlagerauftrag acht Stückgüter 6-2 der zweiten Breitenklasse B2 und der zweite Einlagerauftrag sechs Stückgüter 6-8 der achten Breitenklasse B8.

Die Stückgüter 6-2, 6-8 werden gemäß Schritt S5 von der Fördertechnik 3 selektiv nach Breitenklasse zu zumindest einem Bereitstellplatz 53 zugeführt und an diesem aufeinander folgend bereitgestellt, siehe Fig. 8a - 8e. Nach diesem Ausführungsbeispiel werden an dem zumindest einem Bereitstellplatz 53 vorerst die acht Stückgüter 6-2 der zweiten Breitenklasse B2 nacheinander bereitgestellt. Darauf folgend werden an dem zumindest einem Bereitstellplatz 53 die sechs Stückgüter 6-8 der achten Breitenklasse B8 nacheinander bereitgestellt. Anderenfalls können, wie dies jedoch nicht dargestellt ist, wenn mehrere Lagersysteme vorgesehen sind, auch an einem ersten Bereitstellplatz 53 vier Stückgüter 6-2 der zweiten Breitenklasse B2 und an einem zweiten Bereitstellplatz 53 vier Stückgüter 6-2 der zweiten Breitenklasse B2 bereitgestellt werden. Danach werden die sechs Stückgüter 6-8 der achten Breitenklasse B4 auf gleiche Weise dem ersten Bereitstellplatz 53 und zweiten Bereitstellplatz 53 zugeführt und an diesen bereitgestellt.

In einem Schritt S6 wird von der Steuereinheit 8 der zumindest eine Lagerkanal 4 bestimmt, in welchen die Stückgüter 6 gemäß einem Einlagerauftrag eingelagert werden sollen. Umfasst der erste Einlagerauftrag mehr Stückgüter 6 als in einem Lagerkanal 4 aufgenommen werden können, so wird von der Steuereinheit 8 eine entsprechende Anzahl an Lagerkanälen 4 bestimmt, in welchen nacheinander die Stückgutgruppen 61-2 (wie in Fig. 8a - 8e gezeigt) eingelagert werden.

Eine besonders hohe Einlagerleistung wird erreicht, wenn von der Steuereinheit 8 die leeren Lagerkanäle 4, insbesondere innerhalb einer Lagerzone 16, 17 ermittelt werden. In einem leeren Lagerkanal 4 kann die gesamte Lagertiefe 35 genutzt und eine maximale Anzahl an Stückgütern 6 eingelagert werden. So können bei vorhandener Längenabmessung 9 der Stückgüter 6-2 in der ersten Lagerzone 16 in den leeren Lagerkanal 4 vier Stückgüter 6-2 der Breitenklasse B2 und bei vorhandener Längenabmessung 9 der Stückgüter 6-8 in der zweiten Lagerzone 17 in den leeren Lagerkanal 4 drei Stückgüter 6-8 der Breitenklasse B8 aufgenommen werden.

Jener Fall, bei dem die ganze Lagertiefe 35 nicht voll genutzt werden kann, weil in einem Lagerkanal 4 bereits ein oder mehrere Stückgüter 6 gelagert sind, wird in Fig. 9a - 9f beschrieben. Man spricht von einem so genannten "Zulagervorgang".

Wie oben beschrieben, ist das Lagerregal 1 in Lagerzonen 16, 17 unterteilt und bildet jede Lagerzone 16, 17 eine Vielzahl von nebeneinander vorgesehene (fiktive) Lagerkanäle 4 aus. Wird ein erster Lagerkanal 4 mit den Stückgütern 6 einer ausgewählten Breitenklasse, beispielsweise der Breitenklasse B2, belegt, wird von der Steuereinheit 8 abhängig von der Belegung des ersten Lagerkanales 4 auch die Belegung der restlichen Lagerkanäle 4 innerhalb derselben Lagerzone 16, 17 derart festgelegt, dass nach einer ersten Ausführung (siehe Fig. 8a - 8e, Lagerzone 16) auch die restlichen Lagerkanäle 4 nur mit Stückgütern 6 derselben Breitenklasse, daher sämtliche Lagerkanäle 4 mit Stückgütern 4 der Breitenklasse B2 belegt werden.

Nach einer zweiten Ausführung (siehe Fig. 1, Lagerzone 17) ist ein (rechter) erster Lagerkanal 4 mit den Stückgütern 6 einer ausgewählten Breitenklasse, beispielsweise der Breitenklasse B7, belegt. Die restlichen Lagerkanäle 4 werden hierbei nur mit Stückgütern 6 ausgewählter Breitenklassen, beispielsweise den Breitenklassen B8-B10 belegt werden. Es ist zu erkennen ist, dass die Breitenklassen B8-B10 zur ausgewählten Breitenklasse B6 im ersten Lagerkanal 4 ähnlich sind. Es wird also nicht das chaotische Lagerprinzip verfolgt, bei dem Stückgüter 6 an beliebigen, freien Lagerkanälen 4 eingelagert werden, sondern eine ausgewählte Belegung der Lagerkanäle 4 abgestuft nach Breitenklassen.

Die Stückgüter 6 der Breitenklassen werden von der Stückgutaufnahmevorrichtung 2 zu den Lagerkanälen 4 der Lagerzonen 16, 17 zugefördert und von der Transportvorrichtung 32 in die Lagerkanäle 4 der Lagerzonen 16, 17 eingelagert.

Im Schritt S7 wird die Stückgutaufnahmevorrichtung 2 durch deren Bewegung in einer ersten Richtung (x-Richtung) und gegebenenfalls einer zweiten Richtung (y-Richtung) gegenüber dem Bereitstellplatz 53 positioniert, siehe Fig. 8a.

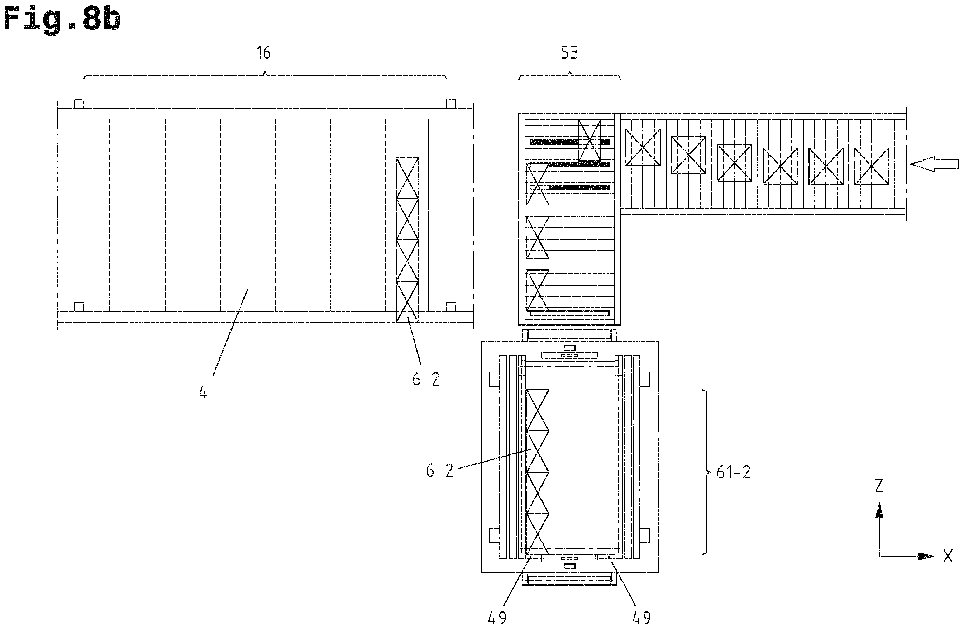

Danach werden die Stückgüter 6-2 von dem Bereitstellplatz 53 auf die Stückgutaufnahmevorrichtung 2 gefördert und auf der Stückgutaufnahmevorrichtung 2 übernommen, Schritt S8. Wie in den Fig. 8a und 8b ersichtlich, können die Stückgüter 6-2 bereits vor der Übergabe auf die Stückgutaufnahmevorrichtung 2 zu einer Stückgutgruppe 61-2 verdichtet werden, daher sind die Stückgüter 6-2 in Förderrichtung dicht aneinander gereiht. Hierzu kann am Bereitstellplatz 53 eine Verdichtungsvorrichtung 62 vorgesehen werden. Diese ist beispielweise durch das oben beschriebene Anschlagelement 54 gebildet, welches zwischen der aus dem Transportweg der Stückgüter 6-2 entlang der Fördervorrichtung 51 herausbewegten Ausgangsstellung und der in den Transportweg der Stückgüter 6-2 entlang der Fördervorrichtung 51 hineinbewegten Betätigungsstellung verstellbar ist, sodass die Stückgüter 6-2 in der Betätigungsstellung des Anschlagelementes gegen dieses auflaufen.

Andererseits kann aber dieser "Verdichtungsvorgang" auch auf der Stückgutaufnahmevorrichtung 2 erfolgen. Wie beschrieben, umfasst die Stückgutaufnahmevorrichtung 2 die Fördervorrichtung 33, die Transportorgane 48, 49 und gegebenenfalls die Anschlagelemente 39, 40. Werden die Stückgüter 6 auf der Stückgutaufnahmevorrichtung 2 von der Fördervorrichtung 33 gefördert, so können diese gegen die in die Betätigungsstellung verstellten Transportorgane 49 positioniert werden. Bei schmalen Stückgütern 6-1 (Stückgüter der ersten Breitenklasse B1) wird das Anschlagelement 40 in die Betätigungsstellung verstellt, sodass diese Stückgüter 6 gegen das Anschlagelement 40 positioniert werden können. Gemäß diesen Ausführungen wird die Stückgutgruppe 61-2 erst auf der Stückgutaufnahmevorrichtung 2 zusammengestellt. Es kann aber auch die bereits auf dem Bereitstellplatz 53 zusammengestellte Stückgutgruppe 61-2 nochmals auf der Stückgutaufnahmevorrichtung 2 verdichtet werden, wenn anzunehmen ist, dass sich die Stückgüter 6-2 auf ihrer Förderbewegung von dem Bereitstellplatz 53 auf die Stückgutaufnahmevorrichtung 2 in Förderrichtung auseinander bewegen.

Befinden sich die Stückgüter 6-2 auf der Stückgutaufnahmevorrichtung 2 und sind diese zur Stückgutgruppe 61-2 zusammengestellt, wie in Fig. 8b ersichtlich, kann mittels der Sensorik eine Istlänge der Stückgutgruppe 61-2 erfasst werden. Die Steuereinheit 8 umfasst ein Auswertemodul 66 (Analysemodul), mittels welchem die Istlänge der Stückgutgruppe 61-2 mit einer Solllänge der Stückgutgruppe 61-2 verglichen wird. Die Steuereinheit 8 kann basierend auf dem Einlagerauftrag eine Solllänge der Stückgutgruppe 61-2 ermitteln, wobei die einzelnen Längenabmessungen 9 der Stückgüter 6-2 aus der Vermessung an der Messstation 58 stammen und die Solllänge der Summe aus diesen Längenabmessungen 9 entspricht. Grundsätzlich können aber anstatt der (gemessenen) Istwerte für die Längenabmessungen 9 auch die Sollwerte für die Längenabmessungen 9 aus den Stammdaten zu den Stückgütern 6-2 herangezogen werden. Dies setzt aber voraus, dass die Stückgüter 6 formstabil sind. Weicht die Istlänge der Stückgutgruppe 61-2 von der Solllänge der Stückgutgruppe 61-2 ab, wird von dem Auswertemodul 66 der Steuereinheit 8 ein Überwachungssignal ausgelöst. Die Abweichung muss dabei über der Summe aus den üblichen Toleranzabweichungen durch Verformungen der Kartons (Stückgutes 6-2) liegen. Beispielweise wenn die Abweichung mehr als 50 mm beträgt. Mit dem Überwachungssignal kann eine optische und/oder akustische Störungsmeldung für eine Bedienperson ausgegeben werden. Eine solche Störungsmeldung liegt vor, wenn die Stückgüter 6-2 nicht ordnungsgemäß vom Bereitstellplatz 53 auf die Stückgutaufnahmevorrichtung 2 übergeben worden sind, beispielsweise wenn ein Stückgut 6-2 zu wenig als erforderlich, an die Stückgutaufnahmevorrichtung 2 übergeben wurde.

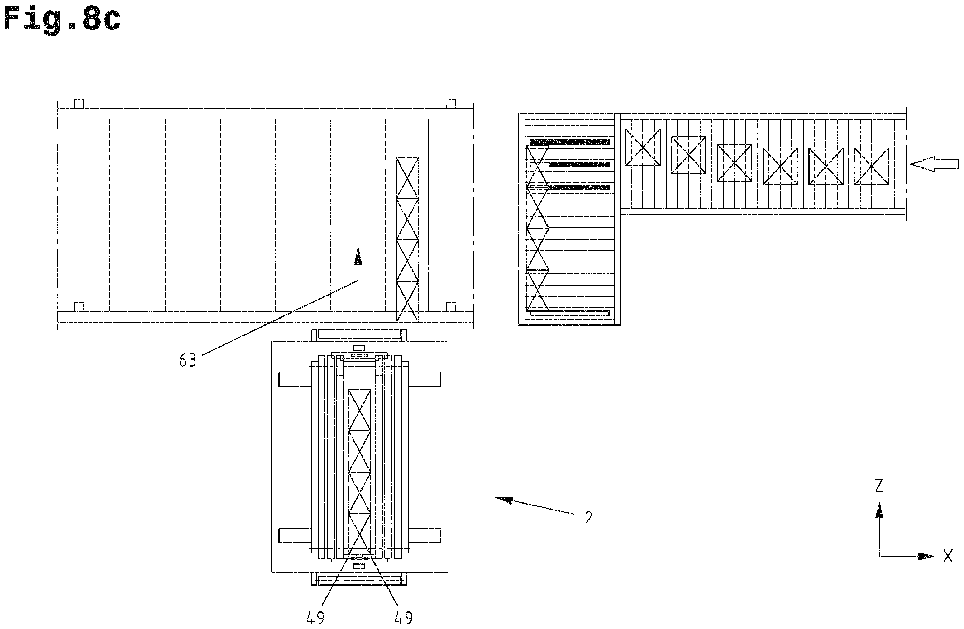

Im Schritt S9 wird die Stückgutaufnahmevorrichtung 2 durch deren Bewegung in einer ersten Richtung (x-Richtung) und gegebenenfalls einer zweiten Richtung (y-Richtung) gegenüber dem von der Steuereinheit 8 festgelegten Lagerkanal 4, in welchen die Stückgutgruppe 61-2 eingelagert werden soll, positioniert, siehe Fig. 8c.

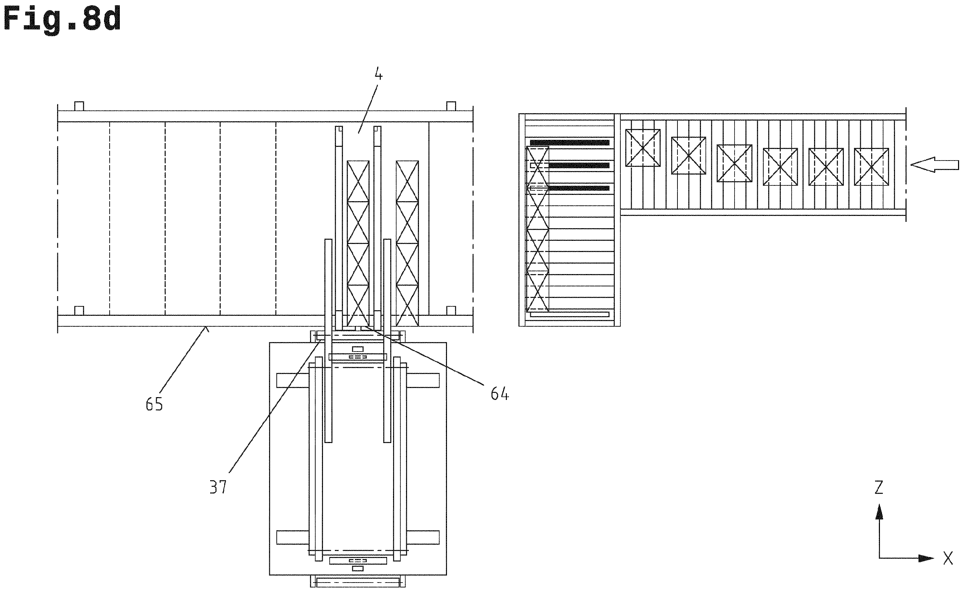

Danach wird in einem Schritt S10 die Stückgutgruppe 61-2 von der Transportvorrichtung 32 von der Stückaufnahmevorrichtung 2 in den festgelegten Lagerkanal 4 gefördert. Nach gezeigter Ausführung werden die Stückgüter 6-2 über die Transportorgane 49, welche in dem in Verlagerungsrichtung (Einlagerrichtung gemäß Pfeil 63) gegenüberliegenden Endbereich der Transportvorrichtung 32 angeordnet sind, gleichzeitig bewegt. Es versteht sich, dass die Verlagerung auch mit nur einem Transportorgan 49 möglich ist, welches in dem in Verlagerungsrichtung (Einlagerrichtung gemäß Pfeil 63) gegenüberliegenden Endbereich der Transportvorrichtung 32 angeordnet ist. Die Stückgüter 6-2 werden dabei soweit in Tiefenrichtung des Lagerkanales 4 bewegt, dass das in Verlagerungsrichtung (Einlagerrichtung gemäß Pfeil 63) hinterste Stückgut 6-2 mit seiner Seitenwand 64 im Wesentlichen fluchtend mit einer Stirnkante 65 des Lagerkanales 4 verläuft, siehe Fig. 8d. Der Begriff "im Wesentlichen fluchtend" ist dabei so zu verstehen, dass das Stückgut 6-2 mit seiner Seitenwand 64 gegenüber der Stirnkante 65 soweit in Richtung des Lagerkanales 4 versetzt sein kann, dass ein Versatzabstand weniger als 80 mm, beispielweise 20 mm beträgt. Das Stückgut 6-2 kann dabei auch um den Versatzabstand an der Stirnkante 65 des Lagerkanals 4 vorragen.

Befinden sich die Stückgüter 6-2 im Lagerkanal 4, wird die in den Lagerkanal 4 ausgefahrene Transportvorrichtung 32, insbesondere die Teleskopeinheiten 42, wieder in eine Ausgangsstellung zurückbewegt. Es ist auch möglich, dass die Stückgutgruppe 61-2 vor der Verlagerungsbewegung in den Lagerkanal 4 durch einen Zentrierhub der Teleskopeinheiten 42 gegenüber der Stückaufnahmevorrichtung 2 positioniert werden, sodass die Stückgüter 6-2 exakt in Reihe hintereinander ausgerichtet werden, ehe sie in den Lagerkanal 4 gefördert werden. Auch können die Stückgüter 6-2 der Stückgutgruppe 61-2 auf der Stückgutaufnahmevorrichtung 2 nochmals in einer Richtung parallel zur Längserstreckung des Lagerkanales 4 und vor der Verlagerung der Stückgutgruppe 61-2 positioniert werden, in dem die Stückgüter 6-2 über die Fördervorrichtung 33 entgegen der Einlagerrichtung 63 gegen die Transportorgane 40 der in einer Ausgangsstellung befindlichen Transportvorrichtung 32 und/oder das Anschlagelement 40 bewegt werden. Damit wird sichergestellt, dass die Stückgüter 6-2 der Stückgutgruppe 61-2 dicht aneinander gereiht sind, ehe sie in den Lagerkanal 4 verlagert werden. Selbst wenn die Stückgüter 6-2 während der Verstellbewegung der Stückgutaufnahmevorrichtung 2 unerwartet verrutscht sind, hat dies keine Auswirkung auf die Ablagegenauigkeit der Stückgüter 6-2 im Lagerkanal 4.

Wie oben erwähnt, umfasst die Stückgutaufnahmevorrichtung 2 Unterstützungsmittel 37, welches den einzulagernden Stückgütern 6 als Führungsauflage dient. Das Unterstützungsmittel 37 überbrückt dabei den Spalt zwischen der Stückgutaufnahmevorrichtung 2 und der Stirnkante 65. Durch diese Maßnahme ist es nun möglich, Stückgüter 6 zwischen der Stückgutaufnahmevorrichtung 2 und dem Lagerkanal 4 zu verlagern, welche besonders kurze Längenabmessung 9 aufweisen, beispielweise im Bereich von 150 mm. Ist das Unterstützungsmittel 37 eine angetriebene Fördervorrichtung 38, so wird bei der Verlagerung das jeweilige Stückgut 6 mit einer Antriebskraft beaufschlagt. Die Fördergeschwindigkeit der Fördervorrichtung 38 entspricht dabei im Wesentlichen der Ausfahrgeschwindigkeit der Transportvorrichtung 32, wenn diese in den Lagerkanal 4 ausgefahren wird.

Nachdem der erste Einlagerauftrag noch Stückgüter 6-2 der zweiten Breitenklasse B2 umfasst, wiederholt sich der beschrieben Einlagervorgang solange bis sämtliche Stückgüter 6-2 in die mehreren Lagerkanäle 4 der ersten Lagerzone 16 eingelagert wurden, Schritt S11. Danach wird der zweite Einlagerauftrag umfassend die Stückgüter 6-8 der achten Breitenklasse B8 auf dieselbe Weise abgearbeitet, wobei die Stückgüter 6-8 hier in mehrere Lagerkanäle 4 der zweiten Lagerzone 17 eingelagert werden.

Auch wenn in den Fig. 1, 8a - 8e der Einfachheit halber die Stückgüter 6 je Lagerkanal 4 stets dieselbe Breitenabmessungen 7 aufweisen, ist es im Sinne der Erfindung möglich, dass in einem Lagerkanal 4 Stückgüter 6 derselben Breitenklasse, beispielweise Breitenklasse B9, jedoch mit geringfügig abweichenden Breitenabmessungen 7 eingelagert werden, wie in Fig. 1 in einem der Lagerkanäle 4 eingetragen. Beispielweise hat das in Tiefenrichtung im Lagerkanal 4 an vorderer Lagerposition abgelegte Stückgut 6 eine Breitenabmessung von 560 mm und das das in Tiefenrichtung im Lagerkanal 4 an hinterer Lagerposition abgelegte Stückgut 6 eine Breitenabmessung von 600 mm. Beide Stückgüter 6 sind aber von der Steuereinheit 8 der Breitenklasse B9 zugeordnet worden.

In den Fig. 9a - 9f ist eine andere Ausführung für die Einlagerung von Stückgütern 6-8 beschrieben. Ein solches Einlagerverfahren findet insbesondere in betriebsschwache Zeiten Anwendung. Dabei befinden sich in einem Lagerkanal 4 bereits ein oder mehrere Stückgüter 6-8 der Breitenklasse B8, ist aber die Lagertiefe 35 noch nicht maximal ausgenutzt. Es können daher in diesen Lagerkanal 4 noch ein oder mehrere Stückgüter 6-8 dieser Breitenklasse B8 hinzu gelagert werden. Das Stückgut 6-8 bzw. die Stückgüter 6-8, welche(s) in den ausgewählten Lagerkanal 4 hinzu gelagert werden soll(en), wird / werden entweder von der Fördertechnik 3 zum Bereitstellplatz 53 angefördert oder aus einem anderen Lagerkanal 4 entnommen.

Die Steuereinheit 8 ermittelt vorerst eine freie Lagertiefe 35 im festgelegten Lagerkanal 4, welche abzüglich der Längenabmessung 9 des zwischengelagerten Stückgutes 6-8 oder der zwischengelagerten Stückgüter 6-8 verbleibt. Danach ermittelt die Steuereinheit 8 die Anzahl an Stückgüter 6-8, welche zusätzlich in den festgelegten Lagerkanal 4 zu dieser Breitenklasse, beispielweise Breitenklasse B8 eingelagert werden können.

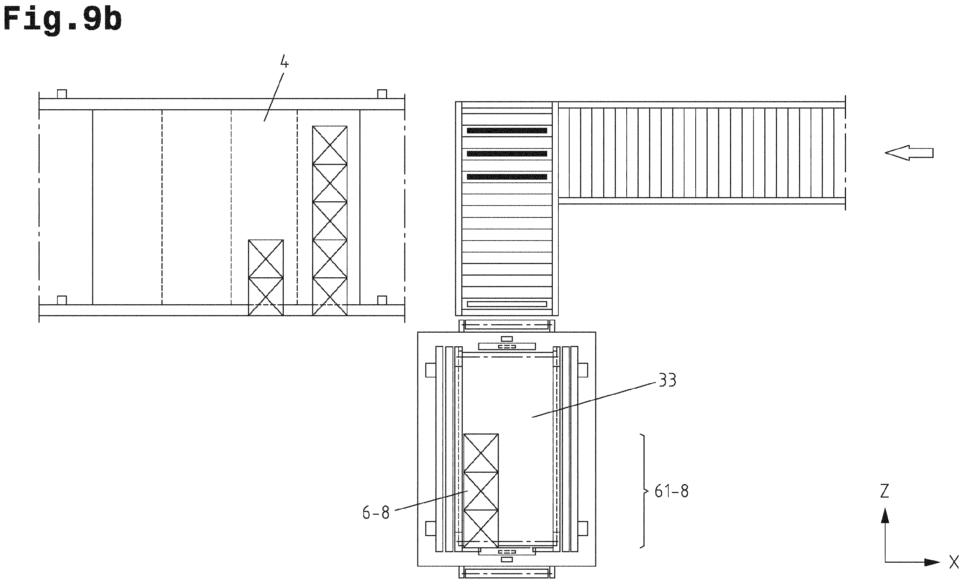

Wie in Fig. 9a gezeigt, wird die Stückgutaufnahmevorrichtung 2 vorerst vor dem Bereitstellplatz 53 positioniert, um das oder die Stückgüter 6-8 aufzunehmen, welche noch in den Lagerkanal 4 der Breitenklasse B8 eingelagert werden können. In Fig. 9b wurden drei Stückgüter 6-8 auf der Stückgutaufnahmevorrichtung 2 übernommen.

Diese Stückgüter 6-8 können wiederum dicht aneinander liegend zu einer Stückgutgruppe 61-8 auf der Stückgutaufnahmevorrichtung 2 bereitgestellt werden, wenn gleich dies nicht zwingend ist. Werden die Stückgüter 6-8 dicht aneinander liegend als Stückgutgruppe 61-8 bereitgestellt, können die Stückgüter 61-8, wie bereits oben in Fig. 7a, 7b, Schritt 8 im Detail beschrieben, bereits vor der Übergabe auf die Stückgutaufnahmevorrichtung 2 oder erst auf der Stückgutaufnahmevorrichtung 2 zu der Stückgutgruppe 61-8 zusammengestellt werden.

Auch kann wiederum die Istlänge der Stückgutgruppe 61-8 auf der Stückgutaufnahmevorrichtung 2 ermittelt werden, wie oben beschrieben.

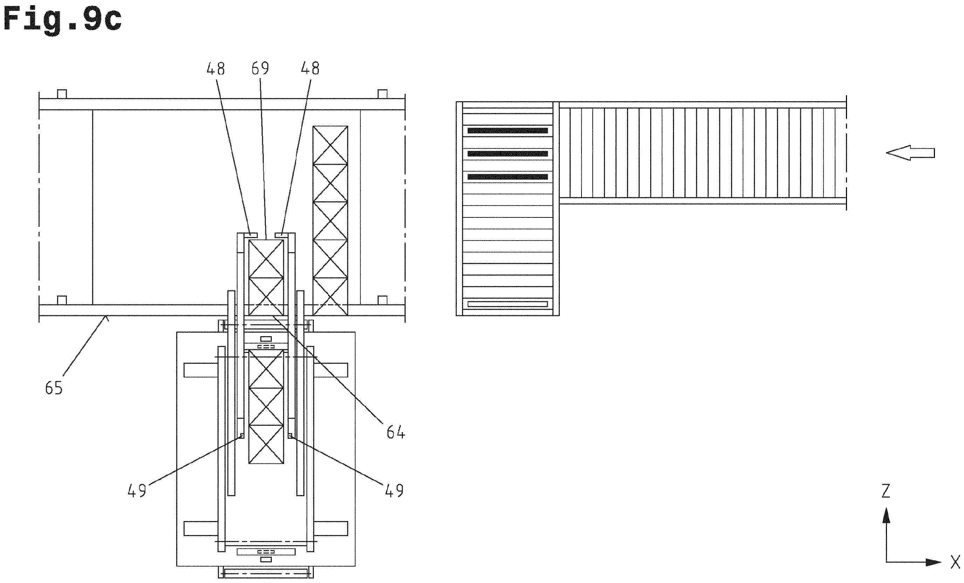

In Fig. 9c ist die Stückgutaufnahmevorrichtung 2 gegenüber dem von der Steuereinheit 8 festgelegten Lagerkanal 4, in welchen das Stückgut 6-8 oder die Stückgutgruppe 61-8 eingelagert werden soll(en), positioniert. Das Stückgut 6-8 oder die Stückgutgruppe 61-8 wird / werden vor dem Umlagervorgang, wie er nachfolgend beschrieben wird, mittels der Fördervorrichtung 33 in einer Richtung parallel zur Tiefenrichtung des Lagerkanales 4 positioniert. Beispielweise wird das Stückgut 6-8 oder die Stückgutgruppe 61-8 gegen das dem Lagerkanal 4, in welchen das Stückgut 6-8 oder die Stückgutgruppe 61-8 eingelagert werden soll(en), benachbarte Anschlagelement 39 (Fig. 3), welches in die Betätigungsstellung bewegt wurde, oder die benachbarten Transportorgane 48, welche in die Betätigungsstellung bewegt wurden, positioniert, in dem die Fördervorrichtung 33 mit einer Förderrichtung in Richtung auf den Lagerkanal 4, daher in Einlagerrichtung, angetrieben wird. Danach wird das Anschlagelement 39 in die Ausgangsstellung oder werden die Transportorgane 48 in die Ausgangsstellung bewegt und die Transportvorrichtung 32 in den Lagerkanal 4 ausgefahren. Die Transportvorrichtung 32 wird in z-Richtung soweit ausgefahren, dass diese von einem im Lagerkanal 4 an vorderster Lagerposition abgestellten Stückgut 6-8 eine von der Stirnkante 65 abgewandten Seitenwand 69 überfährt. Sind mehrere Stückgüter 6-8 im Lagerkanal 4 abgestellt, so wird die Transportvorrichtung 32 in z-Richtung soweit ausgefahren, dass diese von einem im Lagerkanal 4 an tiefster Lagerposition abgestellten Stückgut 6-8 eine von der Stirnkante 65 abgewandten Seitenwand 69 überfährt. Danach werden die Transportorgane 48 in die Betätigungsstellung bewegt. Die Steuereinheit 8 steuert die Ausfahrbewegung der Transportvorrichtung 32, wobei von der Steuereinheit 8 auch der Ausfahrweg, bevorzugt aus der zuvor gemessenen Längenabmessung 9 (Istwert der Längenabmessung 9) des Stückgutes 6-8 oder aus der Summe der zuvor gemessenen Längenabmessungen 9 (Istwerte der Längenabmessungen 9) der Stückgüter 6-8 ermittelt wird. Grundsätzlich wäre es aber auch wiederum möglich, dass die Steuereinheit 8 den Ausfahrweg aus dem Sollwert der Längenabmessung 9 des Stückgutes 6-8 oder den Sollwerten der Längenabmessungen 9 der Stückgüter 6-8 ermittelt, nachdem von jedem Stückgut 6-8 in den Stammdaten die Längenabmessung 9 hinterlegt sind.

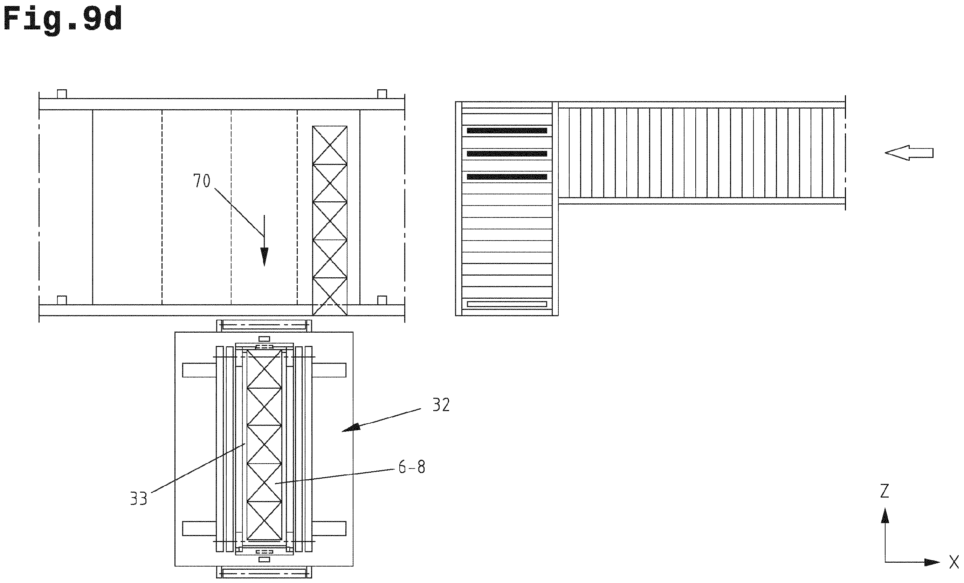

Fig. 9d zeigt die Umlagerung von zwei Stückgütern 6-8. Befindet sich im Lagerkanal 4 nur ein Stückgut 6-8, so wird bloß dieses eine Stückgutes 6-8 umgelagert. Dabei werden nach gezeigter Ausführung die (zwei) Stückgüter 6-8 durch die Bewegung der Transportvorrichtung 32 in einer zweiten Verlagerungsrichtung 70 (Auslagerrichtung) vom Lagerkanal 4 auf die Stückgutaufnahmevorrichtung 2 bewegt. Wie oben beschrieben, werden die in Bezug auf die zweite Verlagerungsrichtung 70 hinteren Transportorgane 48 in die Betätigungsstellung bewegt, ehe die Transportvorrichtung 32 in die Ausgangsstellung auf der Stückgutaufnahmevorrichtung 2 zurückbewegt wird. Mit der Bewegung der Transportvorrichtung 32 zurück in die Ausgangsstellung, werden die (zwei) Stückgüter 6-8 von den in die Betätigungsstellung bewegten Transportorganen 48 verlagert. Mit der Übernahme des ersten Stückgutes 6-8 auf der Stückgutaufnahmevorrichtung 2 wird auch die Fördervorrichtung 33 angetrieben, derart, dass die Bewegungsgeschwindigkeit der Transportvorrichtung 32 und Fördergeschwindigkeit der Fördervorrichtung 33 im Wesentlichen synchronisiert sind. Damit werden die (drei) Stückgüter 6-8, welche sich bereits auf der Fördervorrichtung 33 befinden, und die (zwei) Stückgüter 6-8, welche noch auf die Fördervorrichtung 33 übernommen werden müssen, gleichzeitig in zweiter Verlagerungsrichtung 70 (Auslagerrichtung) bewegt.

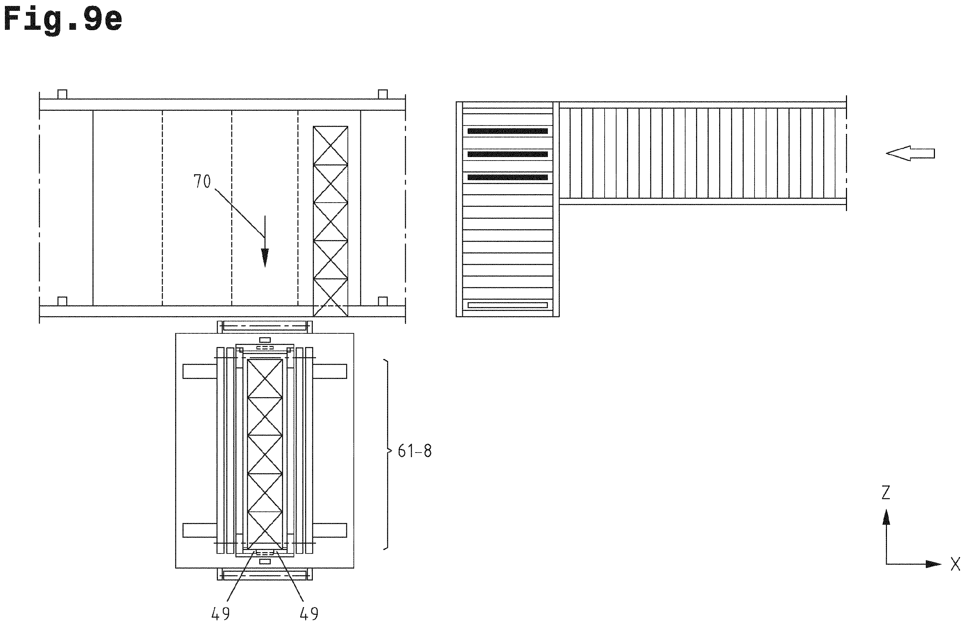

Wie in Fig. 9e gezeigt, können die (fünf) Stückgüter 6-8 der Breitenklasse B8 mittels der Fördervorrichtung 33 auf der Stückgutaufnahmevorrichtung 2 zu der (vollständigen) Stückgutgruppe 61-8 in einer Richtung parallel zur Tiefenrichtung des Lagerkanales 4 positioniert werden. Beispielweise werden die Stückgüter 6-8 gegen das dem Lagerkanal 4, in welchen die Stückgutgruppe 61-8 eingelagert werden soll, entfernte Anschlagelement 40 (Fig. 3), welches in die Betätigungsstellung bewegt wurde, oder die entfernten Transportorgane 49, welche in die Betätigungsstellung bewegt wurden, positioniert, in dem die Fördervorrichtung 33 mit einer Förderrichtung weg vom Lagerkanal 4, daher in Auslagerrichtung 70, angetrieben wird. Die dem Lagerkanal 4, in welchen die Stückgutgruppe 61-8 eingelagert werden soll, benachbarten Transportorgane 48 werden in die Ausgangsstellung zurück bewegt.

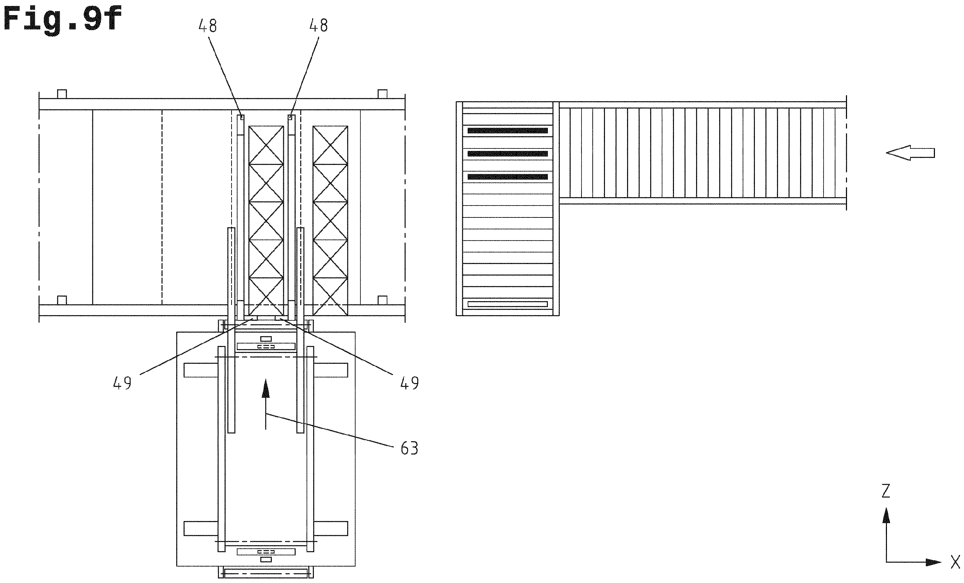

Fig. 9f zeigt schließlich die Verlagerung der gebildeten Stückgutgruppe 61-8 von der Stückgutaufnahmevorrichtung 2 in den Lagerkanal 4 mittels der Transportvorrichtung 32. Die Stückgüter 6-8 werden gleichzeitig in eine erste Verlagerungsrichtung 63 (Einlagerrichtung) und soweit in Tiefenrichtung des Lagerkanales 4 bewegt, dass das in Verlagerungsrichtung 63 (Einlagerrichtung) hinterste Stückgut 6-8 mit seiner Seitenwand 64 im Wesentlichen fluchtend mit einer Stirnkante 65 des Lagerkanales 4 verläuft. Es werden hierzu die Transportorgane 49, welche in die Betätigungsstellung bewegt wurden, eingesetzt. Vor der Verlagerung der Stückgutgruppe 61-8 von der Stückgutaufnahmevorrichtung 2 in den Lagerkanal 4 könne die Stückgüter 6-8 der Stückgutgruppe 61-8 auf der Stückgutaufnahmevorrichtung 2 in einer Richtung quer zur Längserstreckung des Lagerkanales 4 ausgerichtet werden. Beispielweise ist es möglich, dass die Stückgutgruppe 61-8 vor der Verlagerungsbewegung in den Lagerkanal 4 durch einen Zentrierhub der Teleskopeinheiten 42 gegenüber der Stückaufnahmevorrichtung 2 positioniert werden, sodass die Stückgüter 6-8 exakt in Reihe hintereinander ausgerichtet werden, ehe sie in den Lagerkanal 4 gefördert werden.

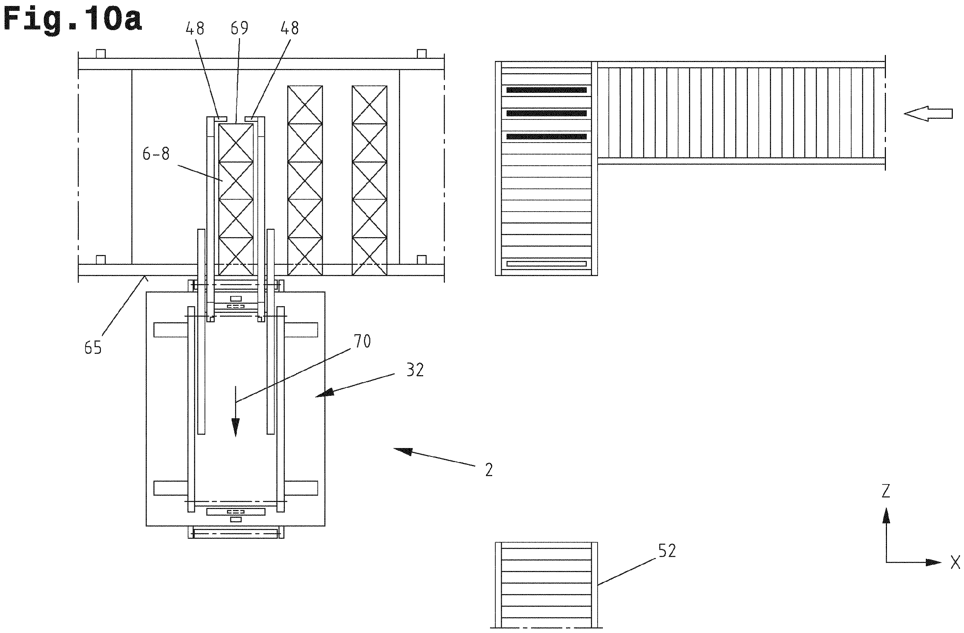

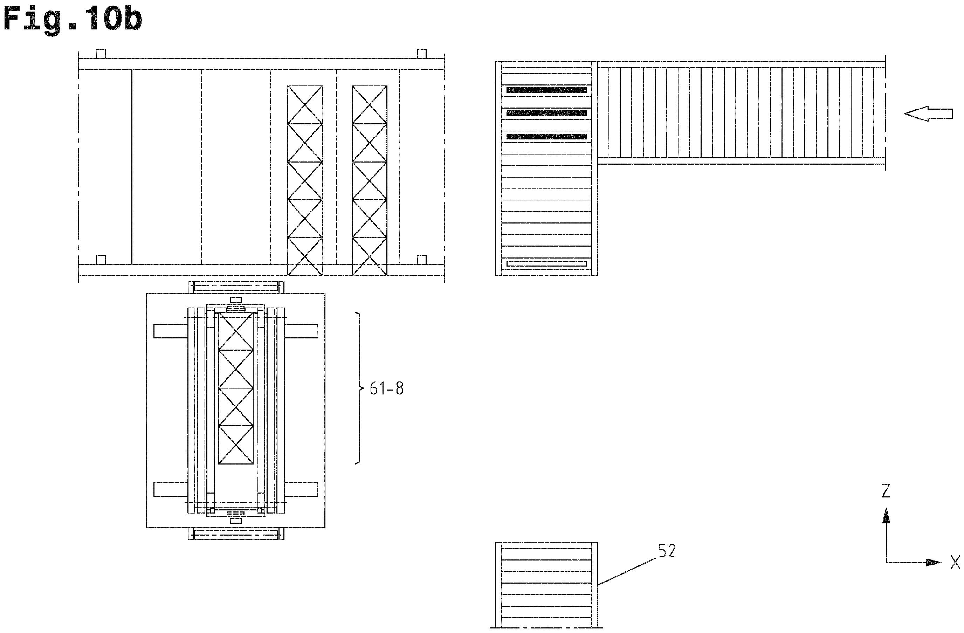

In den Fig. 10a - 10b ist das Auslagern einer Stückgutgruppe 61-8, am Beispiel der Stückgutgruppe 61-8 auf die vor einem Lagerkanal 4 positionierte Stückgutaufnahmevorrichtung 2 beschrieben. Anderenfalls kann aus dem Lagerkanal 4 auch nur ein einzelnes Stückgut 6-8 ausgelagert werden. Die Anzahl der auszulagernden Stückgüter 6-8 ist durch einen Kommissionierauftrag bzw. Auslagerauftrag festgelegt. Hierzu wird der Auslagerauftrag elektronisch erfasst, beispielweise an einer Eingabevorrichtung (Computer). Der Auslagerauftrag kann eine Vielzahl von gleichartigen Stückgütern 6 umfassen, sodass ganze Stückgutgruppen 61-8 ausgelagert werden können, womit eine hohe Auslagerleistung erreicht wird.

Beim Auslagervorgang wird ein einzelnes Stückgut 6-8 oder die Stückgutgruppe 61-8 mittels der Transportvorrichtung 32 vom Lagerkanal 4 auf die Stückgutaufnahmevorrichtung 2 derart bewegt, dass die Transportvorrichtung 32 alle im Lagerkanal 4 befindlichen Stückgüter 6-8 gleichzeitig in einer zweiten Verlagerungsrichtung 70 (Auslagerrichtung) und soweit aus dem Lagerkanal 4 heraus bewegt, bis die gewünschte Anzahl an Stückgütern 6-8 oder die Stückgutgruppe 61-8 auf der Stückgutaufnahmevorrichtung 2 positioniert ist.

Wie in Fig. 10a ersichtlich, wird die Transportvorrichtung 32 in z-Richtung soweit ausgefahren, dass diese das im Lagerkanal 4 an tiefster Lagerposition abgestellte Stückgut 6-8 (von mehreren Stückgütern 6-8) an einer von der Stirnkante 65 abgewandten Seitenwand 69 überfährt. Danach werden die Transportorgane 48 in die Betätigungsstellung bewegt. Die Steuereinheit 8 steuert die Ausfahrbewegung der Transportvorrichtung 32, wobei von der Steuereinheit 8 der Ausfahrweg, bevorzugt aus der zuvor gemessenen Längenabmessung 9 (Istwert der Längenabmessung 9) eines Stückgutes 6-8 oder aus der Summe der zuvor gemessenen Längenabmessungen 9 (Istwerte der Längenabmessungen 9) mehrerer Stückgüter 6-4 ermittelt wird. Grundsätzlich wäre es aber auch wiederum möglich, dass die Steuereinheit 8 den Ausfahrweg aus den Sollwerten der Längenabmessungen 9 der Stückgüter 6-4 ermittelt, nachdem von jedem Stückgut 6-4 in den Stammdaten die Längenabmessung 9 hinterlegt sind.

Mit der Bewegung der Transportvorrichtung 32 zurück in die Ausgangsstellung, werden die (vier) Stückgüter 6-8 von den in die Betätigungsstellung bewegten Transportorganen 48 verlagert. Mit der Übernahme des ersten Stückgutes 6-8 auf der Stückgutaufnahmevorrichtung 2 wird auch die Fördervorrichtung 33 angetrieben, derart, dass die Bewegungsgeschwindigkeit der Transportvorrichtung 32 und Fördergeschwindigkeit der Fördervorrichtung 33 im Wesentlichen synchronisiert sind. Die Stückgüter 6-8 werden auf der Stückgutaufnahmevorrichtung 2 gegen das vom Lagerkanal 4, aus welchen die Stückgüter 6-8 ausgelagert wurden, entfernte Anschlagelement 40, welches in die Betätigungsstellung bewegt wurde, oder die entfernten Transportorgane 49, welche in die Betätigungsstellung bewegt wurden, positioniert, in dem die Fördervorrichtung 33 mit einer Förderrichtung weg vom Lagerkanal 4, daher in Auslagerrichtung 70, angetrieben wird.

Wurde die Stückgutgruppe 61-8 auf der Stückgutaufnahmevorrichtung 2 übernommen, wird die Stückgutaufnahmevorrichtung 2 zur zweiten Fördervorrichtung 52 bewegt und vor der zweiten Fördervorrichtung 52 positioniert. Danach wird die Stückgutgruppe 61-8 auf die zweite Fördervorrichtung 52 abgefördert.

Abschließend sei noch erwähnt, dass das gezeigte Lagersystem eine mögliche Ausführung darstellt. Es ist andererseits auch möglich, dass die Stückgutaufnahmevorrichtung 2 auf einem Hubbalkengerät angeordnet ist, welches stationär aufgestellt ist und einen vertikal in y-Richtung bewegbaren Hubbalken und zumindest eine entlang des Hubbalkens in x-Richtung bewegbare Stückgutaufnahmevorrichtung 2 umfasst. Auf der Stückgutaufnahmevorrichtung 2 ist eine relativ gegenüber dieser in einer z-Richtung in den Lagerkanal 4 ausfahrbare Transportvorrichtung 32 montiert. Andererseits kann das Lagersystem auch eine Vielzahl von Stückgutaufnahmevorrichtungen 2 aufweisen, welche jeweils auf einer ausschließlich in x-Richtung bewegbaren Verfahreinheit montiert sind. Solche Verfahreinheiten sind aus dem Stand der Technik bestens bekannt und sind so genannte Einebenenregalbediengeräte (Shuttle), siehe beispielweise die WO 2013/090970 A2.

Auch sei noch erwähnt, dass eine Kombination aus dem Einlagerprinzip und/oder Auslagerprinzip, wie oben beschrieben, und dem Einlagerprinzip und/oder Auslagerprinzip, wie in der US 6,923,612 B2 beschrieben, möglich ist. In diesem Fall ist die oben beschriebene Transportvorrichtung 32 zum Einlagern von Stückgütern 6 in die Lagerkanäle 4 und Auslagern von Stückgütern 6 aus den Lagerkanälen 4 an jedem zweiten Schlitten 45 mit einem zusätzlichen Transportorgan ausgestattet, welches zwischen den äußeren Transportorganen 48, 49 angeordnet ist, wobei auch das zusätzliche Transportorgan mit einem Antriebsmotor gekuppelt und über diesen zwischen einer Ausgangsstellung und Betätigungsstellung bewegbar ist. Die zusätzlichen Transportorgane werden für das oben beschriebene Verfahren stets in der (nicht aktiven) Ausgangsstellung gehalten. Soll die Transportvorrichtung 32 aber gemäß dem Einlagerprinzip und/oder Auslagerprinzip der US 6,923,612 B2 verwendet werden, kann die Steuereinheit 8 auch diese zusätzlichen Transportorgane ansteuern. Bei einer solchen Kombination von Einlagerprinzip und/oder Auslagerprinzip können Lagerzonen 16, 17 entstehen, bei denen zum Einen die Stückgüter 6 in den Lagerkanälen 4 jeweils dicht aneinander liegend gelagert werden und zum Anderen die Stückgüter 6 in den Lagerkanälen 4 jeweils mit gegenseitigem Abstand gelagert werden.

Die Ausführungsbeispiele zeigen mögliche Ausführungsvarianten des Lagersystemes, wobei an dieser Stelle bemerkt sei, dass die Erfindung wie beansprucht definiert ist und nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Ordnung halber sei abschließend darauf hingewiesen, dass zum besseren Verständnis des Aufbaus des Lagersystemes dieses bzw. dessen Bestandteile teilweise unmaßstäblich und/oder vergrößert und/oder verkleinert dargestellt wurden.

**Bezugszeichenaufstellung**

| | | | |
|---|---|---|---|
| 1 | Lagerregal | 31 | Antriebsrolle |
| 2 | Stückgutaufnahmevorrichtung | 32 | Transportvorrichtung |
| 3 | Fördertechnik | 33 | Fördervorrichtung |
| 4 | Lagerkanal | 34 | Transportfläche |
| 5 | Regalebene | 35 | Lagertiefe |
| 6 | Stückgut | 36 | Antriebsmotor |
| 7 | Breitenabmessung | 37 | Unterstützungsmittel |
| 8 | Steuereinheit | 38 | Fördervorrichtung |
| 9 | Längenabmessung | 39 | Anschlagelement |
| 10 | vorderer Regalsteher | 40 | Anschlagelement |
| 11 | hinterer Regalsteher | 41 | Messeinrichtung |
| 12 | vordere Längstraverse | 42 | Teleskopiereinheiten |
| 13 | hintere Längstraverse | 43 | Grundrahmen |
| 14 | Lagerboden | 44 | Schlitten |
| 15 | Lagerfläche | 45 | Schlitten |
| 16 | Lagerzone | 46 | Antriebsmotor |
| 17 | Lagerzone | 47 | Antriebsmotor |
| 18 | Tragrahmen | 48 | Transportorgan |
| 19 | Regalgasse | 49 | Transportorgan |
| 20 | Verfahreinheit | 50 | Antriebsmotor |
| 21 | Mast | 51 | Fördervorrichtung |
| 22 | unteres Fahrwerk | 52 | Fördervorrichtung |
| 23 | oberes Fahrwerk | 53 | Bereitstellplatz |
| 24 | untere Fahrschiene | 54 | Anschlagelement |
| 25 | obere Fahrschiene | 55 | Stellantrieb |
| 26 | Hubantrieb | 56 | Riemenumsetzer |
| 27 | Zugmitteltrieb | 57 | Übernahmeplatz |
| 28 | Antriebsmotor | 58 | Messstation |
| 29 | Fahrantrieb | 59 | Auswertemodul |
| 30 | Antriebsmotor | 60 | Analysemodul |
| 61 | Stückgutgruppe | | |
| 62 | Verdichtungsvorrichtung | | |
| 63 | Einlagerrichtung | | |
| 64 | Seitenwand | | |
| 65 | Stirnkante | | |
| 66 | Auswertemodul | | |
| 67 | Ausschleuspunkt | | |
| 68 | Einschleuspunkt | | |
| 69 | Seitenwand | | |
| 70 | Auslagerrichtung | | |

## Patentansprüche

1. Lagersystem mit einem Lagerregal (1) mit einer Vielzahl von Lagerkanälen (4), zumindest einer entlang des Lagerregales (1) in einer ersten Richtung (x-Richtung) bewegbaren Stückgutaufnahmevorrichtung (2) und einer relativ gegenüber der Stückgutaufnahmevorrichtung (2) in einer zweiten Richtung (z-Richtung) in den Lagerkanal (4) ausfahrbaren Transportvorrichtung (32) sowie einer Steuereinheit (8) für die Stückgutaufnahmevorrichtung (2) und Transportvorrichtung (32), wobei das Lagerregal (1), insbesondere die Lagerkanäle (4), dazu eingerichtet ist, Stückgüter (6) unterschiedlicher Abmessungen in den Lagerkanälen (4) jeweils dicht aneinander liegend zu lagern, wobei die Steuereinheit (8) dazu eingerichtet ist:
- von den Stückgütern (6) zumindest eine Breitenabmessung (7) in einem elektronischen Auswertemodul (59) zu erfassen, welche Breitenabmessung (7) quer zur Längserstreckung des Lagerkanales (4) verläuft, wenn das Stückgut (6) im Lagerkanal (4) eingelagert wurde,
- Breitenklassen festzulegen und die Stückgüter (6) zu den jeweiligen Breitenklassen zuzuordnen,
- zumindest einen Lagerkanal (4) aus einer Mehrzahl von Lagerkanälen (4) festzulegen und eine Lagertiefe (35) für diesen Lagerkanal (4) zu ermitteln, wobei in diesen Lagerkanal (4) Stückgüter (6) nur einer einzigen Breitenklasse eingelagert werden,
- eine Fördertechnik (3) zu steuern, um die Stückgüter (6) selektiv nach Breitenklasse zu einem Bereitstellplatz (53) zu fördern,
- die Stückgutaufnahmevorrichtung (2) zu steuern, um diese vor dem Bereitstellplatz (53) zu positionieren und danach diejenigen Stückgüter (6) auf die Stückgutaufnahmevorrichtung (2) zu übernehmen, welche zu dieser Breitenklasse in den festgelegten Lagerkanal (4) eingelagert werden sollen, wobei die Stückgüter (6) auf der Stückgutaufnahmevorrichtung (2) dicht aneinander gereiht zu einer Stückgutgruppe (61) bereitgestellt werden,
- die Stückgutaufnahmevorrichtung (2) zu steuern, um diese vor dem festgelegten Lagerkanal (4) zu positionieren und danach die Stückgutgruppe (61) mittels der Transportvorrichtung (32) von der Stückgutaufnahmevorrichtung (2) in den Lagerkanal (4) zu verlagern, wozu die Stückgüter (6) gleichzeitig in eine erste Verlagerungsrichtung (Einlagerrichtung 63) und soweit in Tiefenrichtung des Lagerkanales (4) bewegt werden, dass das in Verlagerungsrichtung (Einlagerrichtung 63) hinterste Stückgut (6) mit seiner Seitenwand (64) im Wesentlichen fluchtend mit einer Stirnkante (65) des Lagerkanales (4) verläuft,
**dadurch gekennzeichnet, dass**
die Stückgutaufnahmevorrichtung (2) eine motorisierte Fördervorrichtung (33), die Transportvorrichtung (32) und Unterstützungsmittel (37) aufweist, wobei die motorisierte Fördervorrichtung (33), die Transportvorrichtung (32) und die Unterstützungsmittel (37) auf einem Tragrahmen (18) gelagert sind, und wobei die Unterstützungsmittel (37) in den gegenüber liegenden Endbereichen der motorisierten Fördervorrichtung (33) angeordnet und jeweils durch eine motorisierte Fördervorrichtung (38) gebildet sind, sodass auf der Verlagerungsbewegung der Stückgüter (6) zwischen der Stückgutaufnahmevorrichtung (2) und dem Lagerkanal (4) das Stückgut (6) auf dem Unterstützungsmittel (37) aufliegen und mit einer Antriebskraft beaufschlagt werden kann, und wobei die motorisierten Fördervorrichtungen (38) der Unterstützungsmittel (37) jeweils durch eine angetriebene Stützrolle gebildet sind.

2. Lagersystem nach Anspruch 1, **dadurch gekennzeichnet, dass** die Transportvorrichtung (32) auf dem Tragrahmen (18) gelagert ist und parallel zu Längsseiten der Fördervorrichtung (33) angeordnete Teleskopeinheiten (42) aufweist, wobei die Teleskopeinheiten (42) jeweils einen Grundrahmen (43), einen gegenüber dem Grundrahmen (43) verstellbaren ersten Schlitten (44) und einen gegenüber dem ersten Schlitten (44) verstellbaren zweiten Schlitten (45) aufweist, und wobei die zweiten Schlitten (45) jeweils an ihren einander gegenüberliegenden Endbereichen mit einem Transportorgan (48, 49) versehen ist, und wobei die Transportorgane (48, 49) zwischen einer aus dem Transportweg der Stückgüter (6) entlang der Fördervorrichtung (33) herausbewegten Ausgangsstellung und einer in den Transportweg der Stückgüter (6) entlang der Fördervorrichtung (33) hineinbewegten Betätigungsstellung verstellbar sind.

3. Lagersystem nach Anspruch 1, **dadurch gekennzeichnet, dass** die motorisierte Fördervorrichtung (33) einen Gurtförderer aufweist, dessen Transportfläche (34) in der Länge im Wesentlichen der maximalen Lagertiefe (35) des Lagerregales (1) und in der Breite im Wesentlichen der maximalen Breitenabmessung (7) eines Stückgutes (6) entspricht.

4. Lagersystem nach Anspruch 1 oder 2, **dadurch gekennzeichnet, dass** die Stückgutaufnahmevorrichtung (2) ferner Anschlagelemente (39, 40) aufweist, wobei die motorisierte Fördervorrichtung (33), die Transportvorrichtung (32) und die Anschlagelemente (39, 40) auf dem Tragrahmen (18) gelagert sind, und wobei die Anschlagelemente (39, 40) in den gegenüber liegenden Endbereichen der motorisierten Fördervorrichtung (33) angeordnet und zwischen einer aus dem Transportweg der Stückgüter (6) entlang der Fördervorrichtung (33) herausbewegten Ausgangsstellung und einer in den Transportweg der Stückgüter (6) entlang der Fördervorrichtung (33) hineinbewegten Betätigungsstellung verstellbar sind.

5. Lagersystem nach Anspruch 1 oder 2, **dadurch gekennzeichnet, dass** die Stückgutaufnahmevorrichtung (2) ferner eine Sensorik (41) aufweist, wobei die motorisierte Fördervorrichtung (33), die Transportvorrichtung (32) auf dem Tragrahmen (18) gelagert sind, und wobei die Sensorik (41) dazu eingerichtet ist, die Stückgüter (6) auf der Stückgutaufnahmevorrichtung (2) zu erfassen, und die mit der Steuereinheit (8) verbunden ist, um eine Istlänge der Stückgutgruppe (61) auf der Stückgutaufnahmevorrichtung (2) zu ermitteln.

## Claims

1. A storage system comprising a storage rack (1) having a plurality of storage channels (4), at least one piece goods receiving device (2) which can be moved along the storage rack (1) in a first direction (x-direction), and a transport device (32) which can be extended out from the piece goods receiving device (2) in a second direction (z-direction) into the storage channel (4) as well as a control unit (8) for the piece goods receiving device (2) and transport device (32), wherein the storage rack (1), in particular the storage channels (4), are configured to store piece goods (6) of different dimensions in the storage channels (4) one against the other in a tightly packed manner, wherein the control unit (8) is configured to:
- detect at least a width dimension (7) of the piece goods (6) in an electronic evaluation module (59), which width dimension (7) extends transversely to the longitudinal extension of the storage channel (4) when the piece good (6) has been stored in the storage channel (4),
- designate width classes and assign the piece goods (6) to the respective width classes,
- designate at least one storage channel (4) from a number of storage channels (4) and determine a storage depth (35) for this storage channel (4), wherein only piece goods (6) of a single width class are stored in this storage channel (4),
- control a conveying system (3) in order to convey the piece goods (6) selectively according to width class to a pick-up station (53),
- control the piece goods receiving device (2) in order to position it in front of the pick-up station (53) and, afterwards, to transfer to the piece goods receiving device (2) those piece goods (6) of this width class which should be stored in the designated storage channel (4), wherein the piece goods (6) are lined up on the piece goods receiving device (2) one against the other in a tightly packed manner to form a group of piece goods (61),
- control the piece goods receiving device (2) in order to position it in front of the designated storage channel (4) and, afterwards, to move the group of piece goods (61) by means of the transport device (32) from the piece goods receiving device (2) into the storage channel (4), in doing so the piece goods (6) are moved simultaneously in a first direction of movement (storage direction 63) and in the depth direction of the storage channel (4) to the degree that the lateral wall (64) of the rearmost piece good (6) in the direction of movement (storage direction 63) is substantially flush with an end edge (65) of the storage channel (4),
**characterized in that**
the piece goods receiving device (2) comprises a motorized conveyor device (33), the transport device (32) and supporting means (37), wherein the motorized conveyor device (33), the transport device (32) and the supporting means (37) are mounted on a support frame (18), and wherein the supporting means (37) are disposed in the opposing end regions of the motorized conveyor device (33) and are each formed by a motorized conveyor device (38) so that when the piece goods (6) are being moved between the piece goods receiving device (2) and storage channel (4), the piece goods (6) can be supported on the supporting means (37) and be supplied with a driving force, and wherein the motorized conveyor devices (38) of the supporting means (37) are each formed by a driven support roller.

2. The storage system according to claim 1, **characterized in that** the transport device (32) is mounted on the support frame (18) and has telescopic units (42) disposed parallel with longitudinal sides of the conveyor device (33), wherein the telescopic units (42) each comprise a base frame (43), a first rail (44) that is displaceable relative to the base frame (43) and a second rail (45) that is displaceable relative to the first rail (44), and wherein the second rails (45) are provided with a transport element (48, 49) in each case at their opposing end regions, and wherein the transport element (48, 49) can be moved between an initial position in which they are moved out of the transport path of the piece goods (6) along the conveyor device (33) and an operating position in which they are moved into the transport path of the piece goods (6) along the conveyor device (33).

3. The storage system according to claim 1, **characterized in that** the motorized conveyor device (33) comprises a belt conveyor, the transport surface (34) of which substantially corresponds, in terms of length, to the maximum storage depth (35) of the storage rack (1) and, in terms of width, substantially to the maximum width dimension (7) of a piece good (6).

4. The storage system according to claim 1 or 2, **characterized in that** the piece goods receiving means (2) further comprises stop elements (39, 40), wherein the motorized conveyor device (33), the transport device (32) and the stop elements (39, 40) are mounted on a support frame (18), and wherein the stop elements (39, 40) are disposed in the opposing end regions of the motorized conveyor device (33) and can be moved between an initial position in which they are moved out of the transport path of the piece goods (6) along the conveyor device (33) and an operating position in which they are moved into the transport path of the piece goods (6) along the conveyor device (33).

5. The storage system according to claim 1 or 2, **characterized in that** the piece goods receiving means (2) further comprises a sensor system (41), wherein the motorized conveyor device (33), the transport device (32) are mounted on a support frame (18), and wherein the sensor system (41) is configured to detect the piece goods (6) on the piece goods receiving device (2) and is connected to the control unit (8) in order to determine an actual length of the group of piece goods (61) on the piece goods receiving device (2).

## Revendications

1. Système de stockage avec un rayonnage de stockage (1) avec une pluralité de canaux de stockage (4), au moins un dispositif de logement de pièces (2) mobile dans une première direction (direction x) le long du rayonnage de stockage (1) et un dispositif de transport (32) pouvant être déplacé par rapport au dispositif de logement de pièces (2) dans une deuxième direction (direction z) vers le canal de stockage (4), ainsi qu'une unité de commande (8) pour le dispositif de logement de pièces (2) et le dispositif de transport (32), dans lequel le rayonnage de stockage (1), plus particulièrement les canaux de stockage (4), est conçu pour stocker des pièces (6) de différentes dimensions dans les canaux de stockage (4) respectivement de manière serrée les unes contre les autres, dans lequel l'unité de commande (8) est conçue pour
- saisir, dans un module d'analyse (59), au moins une dimension de largeur (7) des pièces (6), cette dimension de largeur (7) s'étendant transversalement par rapport à l'extension longitudinale du canal de stockage (4) lorsque la pièce (6) a été stockée dans le canal de stockage (4),
- définir des catégories de largeurs et classer les pièces (6) selon les catégories de largeurs,
- définir au moins un canal de stockage (4) parmi une pluralité de canaux de stockage (4) et déterminer une profondeur de stockage (35) pour ce canal de stockage (4), dans lequel, dans ce canal de stockage (4), ne sont stockés que des pièces (6) d'une seule catégorie de largeur,
- contrôler un système de convoyage (3) afin de convoyer les pièces (6) de manière sélective selon leurs catégories de largeurs, vers un emplacement de mise à disposition (53),
- contrôler le dispositif de logement de pièces (2) afin de positionner celui-ci devant l'emplacement de mise à disposition (53) puis de prendre en charge, sur le dispositif de logement de pièces (2), les pièces (6) qui doivent être stockées dans cette catégorie de largeur dans le canal de stockage (4) défini, dans lequel les pièces (6) sont mises à disposition sur le dispositif de logement de pièces (2) de manière alignée étroitement les unes contre les autres afin de former un groupe de pièces (61),
- contrôler le dispositif de logement de pièces (2), afin de positionner celui-ci devant le canal de stockage (4) défini puis de déplacer le groupe de pièces (61) au moyen du dispositif de transport (32) du dispositif de logement de pièces (2) vers le canal de stockage (4), les pièces (6) étant pour cela déplacées à la fois dans une première direction de déplacement (direction de stockage 63) et dans une direction de profondeur du canal de stockage (4) jusqu'à ce que la pièce (6) la plus en arrière dans la direction de déplacement (direction de stockage 63) soit globalement alignée, avec sa paroi latérale (64), avec une arête frontale (65) du canal de stockage (4),
**caractérisé en ce que**
le dispositif de logement de pièces (2) comprend un dispositif de convoyage motorisé (33), le dispositif de transport (32) et des moyens de support (37), dans lequel le dispositif de convoyage motorisé (33), le dispositif de transport (32) et les moyens de support (37) sont logés sur un châssis porteur (18) et dans lequel les moyens de support (37) sont disposés dans les parties d'extrémités opposées du dispositif de convoyage (33) et sont constitués chacun d'un dispositif de convoyage motorisé (38), de façon à ce que, lors du déplacement des pièces (6) entre le dispositif de logement de pièces (2) et le canal de stockage (4), la pièce (6) puisse reposer sur le moyen de support (37) et être entraînée avec une force d'entraînement et dans lequel les dispositifs de convoyage motorisés (38) des moyens de support (37) sont constitués chacun d'un rouleau de support entraîné.

2. Système de stockage selon la revendication 1, **caractérisé en ce que** le dispositif de transport (32) est logé sur le châssis porteur (18) et comprend des unités télescopiques (42) disposées parallèlement aux côtés longitudinaux du dispositif de convoyage (33), dans lequel les unités télescopiques (42) comprennent chacune un châssis de base (43), un premier chariot (44) mobile par rapport au châssis de base (43) et un deuxième chariot (45) mobile par rapport au premier chariot (44) et dans lequel les deuxièmes chariots (45) sont munis chacun, au niveau de leurs parties d'extrémités opposées, d'un organe de transport (48, 49) et dans lequel les organes de transport (48, 49) peuvent être déplacés entre une position initiale déplacée hors de la trajectoire de transport des pièces (6) le long du dispositif de convoyage (33) et une position d'actionnement déplacée vers la trajectoire de transport des pièces (6) le long du dispositif de convoyage (33).

3. Système de stockage selon la revendication 1, **caractérisé en ce que** le dispositif de convoyage motorisé (33) comprend un convoyeur à courroie dont la surface de transport (34) correspond globalement, en ce qui concerne sa longueur, à la profondeur de stockage maximale (35) du rayonnage de stockage (1) et, en ce qui concerne sa largeur, à la dimension de largeur maximale (7) d'une pièce (6).

4. Système de stockage selon la revendication 1 ou 2, **caractérisé en ce que** le dispositif de logement de pièce (2) comprend en outre des éléments de butée (39, 40), dans lequel le dispositif de convoyage motorisé (33), le dispositif de transport (32) et les éléments de butée (39, 40) sont logés sur le châssis porteur (18), et dans lequel les éléments de butée (39, 40) sont disposés dans les parties d'extrémités opposées du dispositif de convoyage motorisé (33) et peuvent être déplacés entre une position initiale déplacée hors de la trajectoire de transport des pièces (6) le long du dispositif de convoyage (33) et une position d'actionnement déplacée vers la trajectoire de transport des pièces (6) le long du dispositif de convoyage (33).

5. Système de stockage selon la revendication 1 ou 2, **caractérisé en ce que** le dispositif de logement de pièce (2) comprend en outre des capteurs (41), dans lequel le dispositif de convoyage motorisé (33), le dispositif de transport (32), sont logés sur le châssis porteur (18) et dans lequel les capteurs (41) sont conçus pour détecter les pièces (6) sur le dispositif de logement de pièces (2), et qui sont reliés avec l'unité de commande (8) afin de déterminer une longueur réelle du groupe de pièces (61) sur le dispositif de logement de pièces (2).
